# EUROPEAN PATENT SPECIFICATION

(11) **EP 4 209 883 B1**
(45) Date of publication and mention of the grant of the patent: **20.05.2026**
(21) Application number: 21900743.2
(22) Date of filing: 15.03.2021
(51) Int. Cl.: G06F 1/16, G06F 3/0485, G06F 3/0486, G06F 3/04886, G06F 3/04883

(54) **ELECTRONIC DEVICE HAVING FOLDABLE DISPLAY AND METHOD FOR CONTROLLING SAME**
ELEKTRONISCHE VORRICHTUNG MIT FALTBARER ANZEIGE UND VERFAHREN ZUR STEUERUNG DAVON
DISPOSITIF ÉLECTRONIQUE DOTÉ D'UN DISPOSITIF D'AFFICHAGE PLIABLE ET PROCÉDÉ DE COMMANDE ASSOCIÉ

(30) Priority: 03.12.2020 KR 20200167726; 10.02.2021 KR 20210019034
(43) Date of publication of application: 12.07.2023
(73) Proprietor: Samsung Electronics Co., Ltd., Suwon-si, Gyeonggi-do 16677 (KR)
(72) Inventor: LEE, Changho, Suwon-si, Gyeonggi-do 16677 (KR); WOO, Kwangtaek, Suwon-si, Gyeonggi-do 16677 (KR); KIM, Byoungkug, Suwon-si, Gyeonggi-do 16677 (KR); OH, Deukkyu, Suwon-si, Gyeonggi-do 16677 (KR); AN, Jinwan, Suwon-si, Gyeonggi-do 16677 (KR)
(74) Representative: Gulde & Partner
(86) International application number: PCT/KR2021/003152
(87) International publication number: WO 2022/119055

(56) References cited:
- KR-A- 20160 091 072
- KR-A- 20160 108 705
- KR-A- 20170 079 549
- KR-A- 20200 122 725
- KR-B1- 101 574 118
- US-A1- 2016 132 074

## Description

### Technical Field

The disclosure relates to an electronic device having a foldable display and a method of controlling the electronic device.

### Background Art

As display technology advances, user terminal devices having foldable displays have been introduced. The foldable displays may also be flexible. A foldable display may become flexible to be folded and unfolded, as a glass substrate covering a liquid crystal of a liquid crystal display (LCD) and an organic light-emitting diode (OLED) is replaced with a plastic film.

Document (US 2016/132074 Al) discloses a conventional mobile terminal with a foldable display unit.

### DISCLOSURE OF INVENTION

### Technical Goals

To execute an application on a multi-window, a method by which a user clicks an icon of each application and then selects a multi-window has been used, rather than a method by which a user generally uses an application.

According to various embodiments, there is provided an electronic device that provides an execution screen of an application on a multi-window when the application is executed while a foldable display is not fully unfolded.

### Technical Solutions

The present invention is defined by the appended set of claims. According to an example embodiment, an electronic device is provided as defined by appended claims.

According to an example embodiment, a control method of controlling an electronic device is provided as defined by the appended claims.

According to an example embodiment, a non-transitory computer-readable storage medium storing a program for controlling an operation of an electronic device is provided as defined by the appended claims

### Effects of Invention

According to various embodiments, when an execution input for an application is received while a foldable display is in a folding state, an execution screen of the application may be provided to a user through a multi-window.

According to various embodiments, while a foldable display is in a folding state, an intuitive multi-window user experience may be provided to a user.

Various other effects directly or indirectly obtained from the present disclosure may also be provided.

### BRIEF DESCRIPTION OF THE DRAWINGS

FIG. 1 is a block diagram illustrating an electronic device in a network environment according to various embodiments.
FIG. 2 is a diagram illustrating a case in which a folding axis of an electronic device is in a vertical direction and a case in which the folding axis of the electronic device is in a horizontal direction according to various embodiments.
FIG. 3 is a diagram illustrating a fully unfolded state, a folding state, and a fully folded state of an electronic device according to various embodiments.
FIG. 4 is a diagram illustrating an out-folding method of an electronic device according to various embodiments.
FIG. 5 is a block diagram illustrating an electronic device providing a multi-window according to various embodiments.
FIG. 6 is a diagram illustrating an example of providing a multi-window in an electronic device according to various embodiments.
FIG. 7 is a diagram illustrating an example of providing a multi-window in an electronic device when a user drags and drops an icon of an application according to various embodiments.
FIG. 8 is a diagram illustrating an example of providing a notification icon in an electronic device before providing a multi-window according to various embodiments.
FIG. 9 is a diagram illustrating an example of providing a multi-window when an electronic device is in a table mode according to various embodiments.
FIG. 10 is a diagram illustrating an example of providing a multi-window when there is a change in a state of an electronic device according to various embodiments.
FIG. 11 is a diagram illustrating an example of controlling an execution screen of an application according to a change in a folding angle in an electronic device according to various embodiments.
FIG. 12 is a diagram illustrating an example of controlling an execution screen of an application according to a change in a folding angle in an electronic device according to various embodiments.
FIG. 13 is a flowchart illustrating a method of providing a multi-window by an electronic device according to various embodiments.
FIG. 14 is a flowchart illustrating a method of providing a multi-window when an electronic device is in a table mode according to various embodiments.
FIG. 15 is a flowchart illustrating a method of providing a multi-window when an occurrence of an event is detected in an electronic device according to various embodiments.
FIG. 16 is a flowchart illustrating a method of providing a notification icon before providing a multi-window by an electronic device according to various embodiments.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

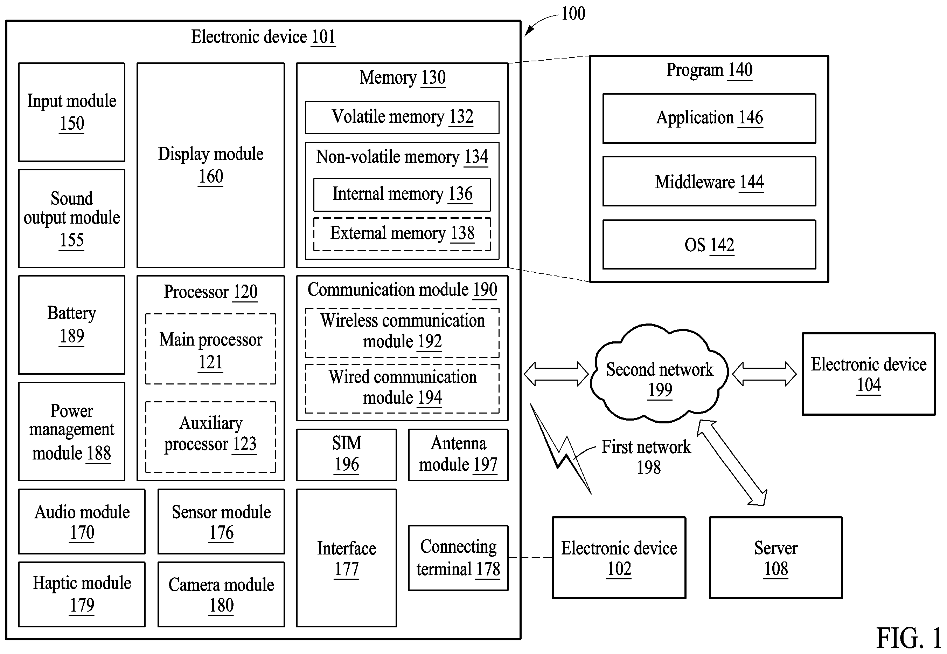

FIG. 1 is a block diagram illustrating an electronic device in a network environment according to various embodiments.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). The electronic device 101 may communicate with the electronic device 104 via the server 108. The electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an example embodiment, as at least a part of data processing or computation, the processor 120 may store a command or data received from another component (e.g., the sensor module 176 or the communication module 190) in a volatile memory 132, process the command or data stored in the volatile memory 132, and store resulting data in a non-volatile memory 134. The processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from or in conjunction with, the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). The auxiliary processor 123 (e.g., an ISP or a CP) may be implemented as a portion of another component (e.g., the camera module 180 or the communication module 190) that is functionally related to the auxiliary processor 123. The auxiliary processor 123 (e.g., an NPU) may include a hardware structure specifically for artificial intelligence (AI) model processing. An AI model may be generated by machine learning. The learning may be performed by, for example, the electronic device 101, in which the AI model is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may alternatively or additionally include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134. The non-volatile memory 134 may include an internal memory 136 and an external memory 138.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. The receiver may be implemented separately from the speaker or as a part of the speaker.

The display module 160 may visually provide information to the outside (e.g., a user) of the electronic device 101. The display module 160 may include, for example, a display, a hologram device, or a projector, and a control circuitry to control its corresponding one of the displays, the hologram device, and the projector. The display module 160 may include a touch sensor adapted to sense a touch, or a pressure sensor adapted to measure an intensity of a force of the touch.

The audio module 170 may convert sound into an electric signal or vice versa. The audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with an external electronic device (e.g., the electronic device 102) directly (e.g., by wire) or wirelessly. The interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). The connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. The haptic module 179 may include, for example, a motor, a piezoelectric element, or an electric stimulator.

The camera module 180 may capture a still image and moving images. The camera module 180 may include one or more lenses, image sensors, ISPs, and flashes.

The power management module 188 may manage power supplied to the electronic device 101. The power management module 188 may be implemented as, for example, at least a part of a power management integrated circuit (PMIC).

The battery 189 may supply power to at least one component of the electronic device 101. The battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and an external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5^{th} generation (5G) network, a next-generation communication network, the Internet, or a computer network (e.g., an LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4^{th} generation (4G) network, and a next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104), or a network system (e.g., the second network 199). The wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 ms or less for each of downlink (DL) and uplink (UL), or a round trip of 1 millisecond (ms) or less) for implementing URLLC.

The antenna module 197 may transmit or receive a signal or power to or from the outside (e.g., an external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an example embodiment, another component (e.g., a radio frequency integrated circuit (RFIC)) other than the radiating element may be additionally formed as a part of the antenna module 197.

The antenna module 197 may form an mmWave antenna module. The mmWave antenna module may include a PCB, an RFIC on a first surface (e.g., a bottom surface) of the PCB or adjacent to the first surface of the PCB and capable of supporting a designated high-frequency band (e.g., an mmWave band), and a plurality of antennas (e.g., an antenna array) disposed on a second surface (e.g., a top or a side surface) of the PCB, or adjacent to the second surface of the PCB and capable of transmitting or receiving signals in the designated high-frequency band.

At least some of the above-described components may be coupled mutually and exchange signals (e.g., commands or data) therebetween via an inter-peripheral communication scheme (e.g., a bus, general-purpose input and output (GPIO), serial peripheral interface (SPI), or mobile industry processor interface (MIPI)).

According to an example embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. All or some of operations to be executed by the electronic device 101 may be executed by one or more of the external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or service, may request one or more external electronic devices to perform at least a part of the function or service. The one or more external electronic devices receiving the request may perform the at least part of the function or the service requested, or an additional function or an additional service related to the request and may transfer a result of the performance to the electronic device 101. The electronic device 101 may provide the result, with or without further processing of the result, as at least part of a response to the request. To that end, cloud computing, distributed computing, mobile edge computing (MEC), or client-server computing technology may be used, for example. The electronic device 101 may provide ultra-low latency services using, e.g., distributed computing or MEC. According to another embodiment, the external electronic device (e.g., the electronic device 104) may include an Internet-of-things (IoT) device. The server 108 may be an intelligent server using machine learning and/or a neural network. The external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

According to various embodiments, an electronic device may be a device of one of various types. The electronic device may include, as non-limiting examples, a portable communication device (e.g., a smartphone, etc.), a computing device, a portable multimedia device, a portable medical device, a camera, a wearable device, or a home appliance. However, the electronic device is not limited to the foregoing examples.

It is to be understood that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B," "at least one of A and B," "at least one of A or B," "A, B, or C," "at least one of A, B, and C," and "at least one of A, B, or C," each of which may include any one of the items listed together in the corresponding one of the phrases, or all possible combinations thereof. Terms such as "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., by wire), wirelessly, or via a third element.

As used in connection with certain embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an example embodiment, the module may be implemented in the form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply denotes that the storage medium is a tangible device, and does not include a signal (e.g., an electromagnetic wave), but this term does not differentiate between where data is semi-permanently stored in the storage medium and where the data is temporarily stored in the storage medium.

According to an example embodiment, a method described herein may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

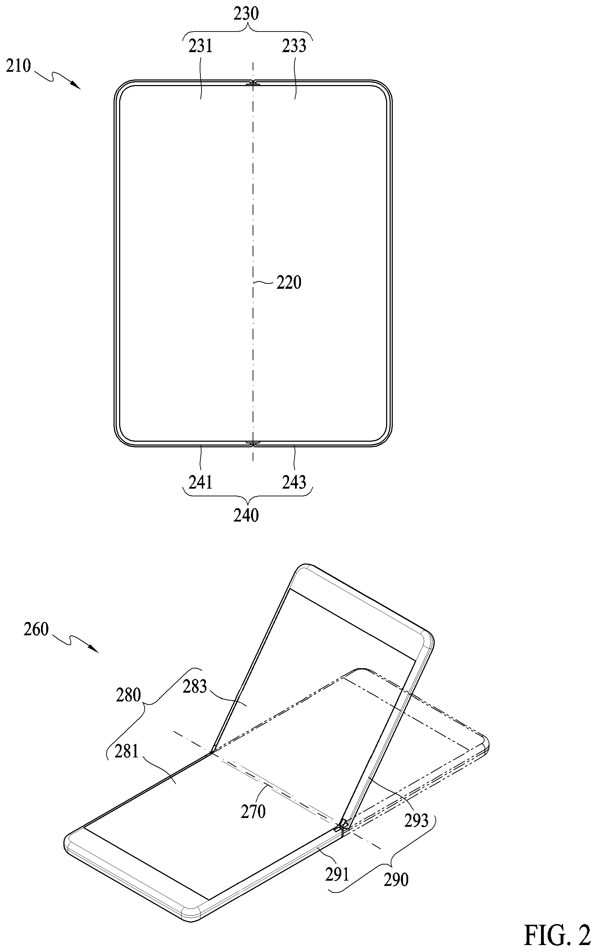

FIG. 2 is a diagram illustrating a case in which a folding axis of an electronic device is in a vertical direction and a case in which the folding axis of the electronic device is in a horizontal direction according to various embodiments.

Referring to FIG. 2, when an electronic device (e.g., the electronic device 101 of FIG. 1) includes a foldable display, a folding axis thereof may be in a vertical direction or in a horizontal direction.

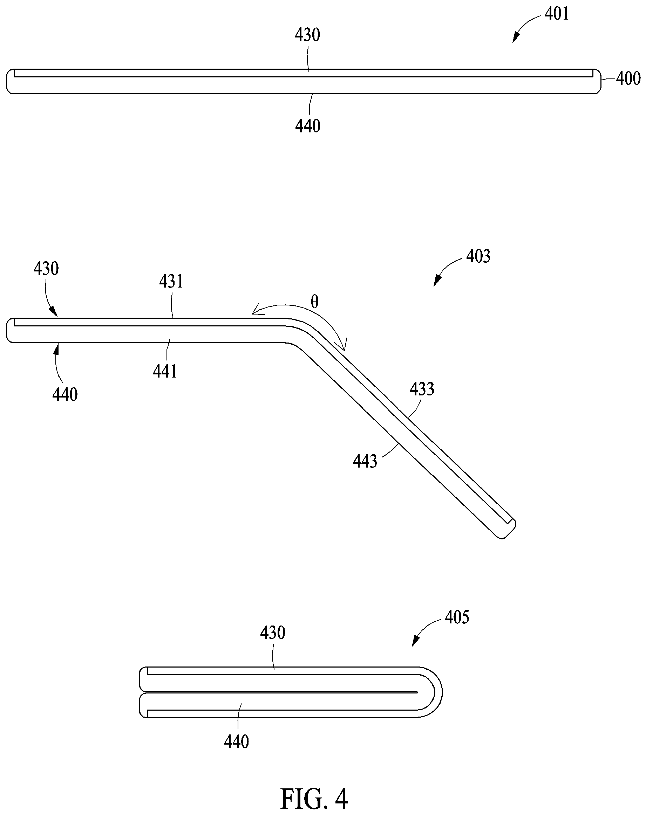

FIG. 2 illustrates a case in which both an electronic device 210 of which a folding axis is in a vertical direction and an electronic device 260 of which a folding axis is in a horizontal direction operate in an in-folding method. An electronic device operating in an out-folding method will be described in detail below with reference to FIG. 4.

The electronic device 210 (e.g., the electronic device 101 of FIG. 1) of which the folding axis is in the vertical direction may include a foldable display 230, a first housing 241, and a second housing 243. The foldable display 230 may be divided into a first area 231 and a second area 233 with respect to a folding axis 220 of a hinge. The first area 231 and the second area 233 of the foldable display 230 may be provided in a rectangular shape with rounded corners and a narrow bezel.

The electronic device 260 (e.g., the electronic device 101 of FIG. 1) of which a folding axis is in a horizontal direction may include a foldable display 280, a first housing 291, and a second housing 293. The foldable display 280 may be divided into a first area 281 and a second area 283 with respect to a folding axis 270 of a hinge. The first area 281 and the second area 283 of the foldable display 280 may be provided in a rectangular shape with rounded corners and a narrow bezel.

According to an example embodiment, of the electronic device 210 or 260, the first area 231 or 281 and the second area 233 or 283 may be folded as the first housing 241 or 291 and the second housing 243 or 293 are folded.

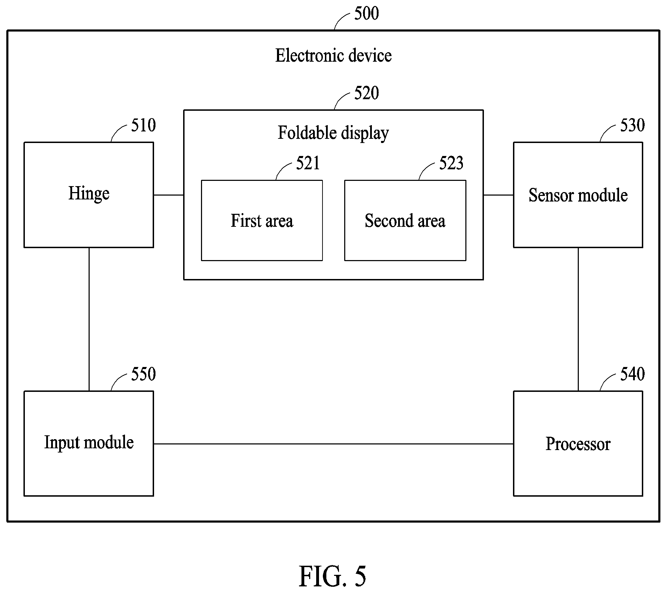

According to an example embodiment, an electronic device (e.g., the electronic device 101 of FIG. 1) providing a multi-window in a case in which a folding axis is in a vertical direction will be described in detail below with reference to FIGS. 5 to 16. However, examples are not limited to such an example of the folding axis being in the vertical direction, and the multi-window may also be provided to the first area 281 and the second area 283 even in a case in which the folding axis is in a horizontal direction.

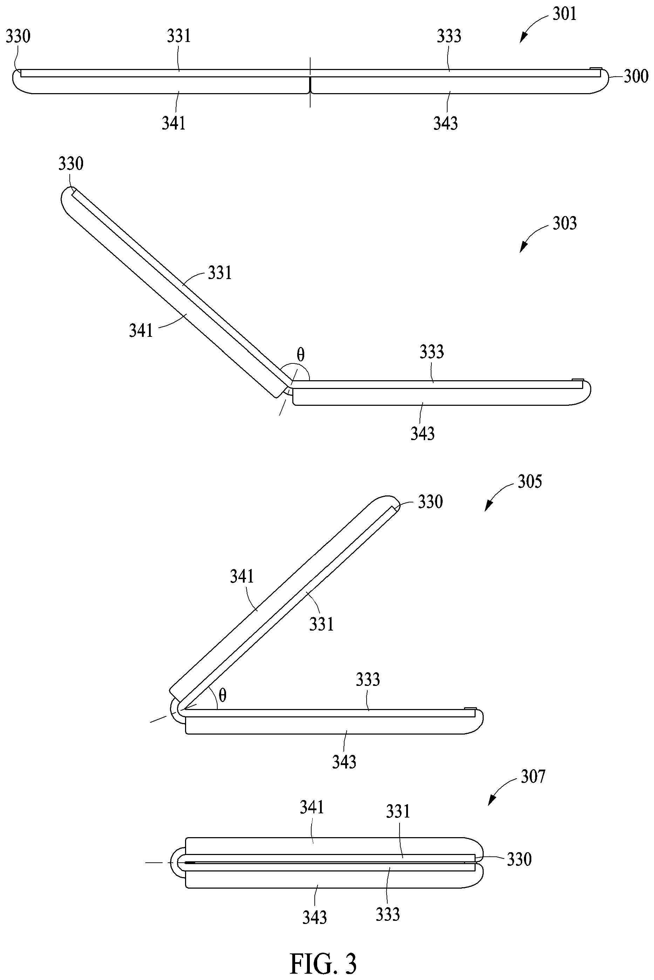

FIG. 3 is a diagram illustrating a fully unfolded state, a folding state, and a fully folded state of an electronic device according to various embodiments.

Referring to FIG. 3, an electronic device 300 (e.g., the electronic device 101 of FIG. 1, and the electronic device 210 or the electronic device 260 of FIG. 2) may include a foldable display 330 (e.g., the foldable display 230 or the foldable display 280 of FIG. 2), a first housing 341, and a second housing 343.

A state 301 may indicate a fully unfolded state or an unfolded state in which the electronic device 300 is fully unfolded or unfolded.

In the state 301, the electronic device 300 may be folded. For example, the electronic device 300 may be folded as the first housing 341 and/or the second housing 343 are folded.

According to an example embodiment, as the electronic device 300 is folded, a first area 331 and a second area 333 of the foldable display 330 may form an angle θ with respect to a folding axis (e.g., the folding axis 220 or the folding axis 270 of FIG. 2), as shown in a state 303 and a state 305. When the angle θ is in a predetermined range, a corresponding state may be referred to as a "folding state," and the angle θ formed between the first area 331 and the second area 333 may be referred to as a "folding angle."

According to an example embodiment, the folding angle in the state 303 may be approximately 135 degrees (°), and the folding angle in the state 305 may be approximately 45°.

A state 307 may indicate a fully folded state in which the electronic device 300 is fully folded.

At least a part of the foldable display 330 may be the same as or similar to the display module 160 described above with reference to FIG. 1.

In the example shown in FIG. 3, the first area 331 and the second area 333 may be folded to face each other. That is, a screen may be folded inward. Such a folding method may be referred to as an in-folding method. Alternatively, the first area 331 and the second area 333 may be folded to face in opposite directions. That is, the screen may be folded outward. Such a folding method may be referred to as an out-folding method. An example to which the out-folding method is applied will be described in detail below with reference to FIG. 4.

FIG. 4 is a diagram illustrating an out-folding method of an electronic device according to various embodiments.

Referring to FIG. 4, an electronic device 400 (e.g., the electronic device 101 of FIG. 1, and the electronic device 210 or the electronic device 260 of FIG. 2) may include a foldable display 430 (e.g., the foldable display 230 or the foldable display 280 of FIG. 2) that is folded outward through out-folding. In a case of out-folding, only a folding direction is opposite to that in a case of in-folding described above with reference to FIG. 3, and a repeated description thereof will thus be omitted.

A state 401 may indicate a fully unfolded or unfolded state in which the electronic device 400 is fully unfolded or unfolded.

In a state 403, the foldable display 430 may be folded outward through out-folding, and the foldable display 430 may form a folding angle θ by a first area 431 (e.g., the first area 231 or the first area 281 of FIG. 2) and a second area 433 (e.g., the second area 233 or the second area 283 of FIG. 2) as shown in the state 403.

A state 405 may indicate a fully folded state in which the electronic device 400 is fully folded.

At least a part of the foldable display 430 may be the same as or similar to the display module 160 described above with reference to FIG. 1.

According to an example embodiment, an electronic device providing a multi-window (e.g., the electronic device 101 of FIG. 1) in a case in which a folding axis is in a vertical direction and operates in an in-folding method will be described in detail below with reference to FIGS. 5 to 15. However, examples are not limited to the case in which the folding axis is in the vertical direction and operates in the in-folding method. For example, even in a case in which the folding axis is in the vertical direction and operates in an out-folding method, in a case in which the folding axis is in the horizontal direction and operates in the in-folding method, and in a case in which the folding axis is in the horizontal direction and operates in the out-folding method, the electronic device may also provide a multi-window to a first area and a second area divided with respect to the folding axis in the same way described above.

FIG. 5 is a block diagram illustrating an electronic device providing a multi-window according to various embodiments.

Referring to FIG. 5, an electronic device 500 (e.g., the electronic device 101 of FIG. 1) providing a multi-window according to an example may include a hinge 510, a foldable display 520, a sensor module 530 (e.g., the sensor module 176 of FIG. 1), a processor 540 (e.g., the processor 120 of FIG. 1), and an input module 550 (e.g., the input module 150 of FIG. 1).

According to an example embodiment, the hinge 510 may allow the electronic device 500 to be folded or unfolded, and as the electronic device 500 is folded or unfolded around the hinge 510, the foldable display 520 (e.g., the foldable display 230 or the foldable display 280 of FIG. 2) may also be folded or unfolded. The foldable display 520 may be disposed on at least one side of the electronic device 500 and may include a first area 521 disposed on one side and a second area 523 disposed on the other side with respect to the hinge 510.

According to an example embodiment, when a folding axis of the hinge 510 is in a vertical direction and operates in an in-folding method, the foldable display 520 (e.g., the foldable display 230 of FIG. 2) may include the first area 521 (e.g., the first area 231 of FIG. 2) disposed on one side and the second area 523 (e.g., the second area 233 of FIG. 2) disposed on the other side with respect to the hinge 510.

According to an example embodiment, when the folding axis of the hinge 510 is in a horizontal direction and operates in the in-folding method, the foldable display 520 (e.g., the foldable display 280 of FIG. 2) may include the first area 521 (e.g., the first area 281 of FIG. 2) disposed on one side and the second area 523 (e.g., the second area 283 of FIG. 2) disposed on the other side with respect to the hinge 510.

According to an example embodiment, when the folding axis of the hinge 510 operates in an out-folding method, the foldable display 520 (e.g., the foldable display 430 of FIG. 4) may include the first area 521 (e.g., the first area 431 of FIG. 4) disposed on one side and the second area 523 (e.g., the second area 433 of FIG. 4) disposed on the other side with respect to the hinge 510.

According to an example embodiment, the sensor module 530 (e.g., the sensor module 176 of FIG. 1) may detect a folding angle (e.g., the folding angle θ of FIG. 3 in a case of in-folding, and the folding angle θ of FIG. 4 in a case of out-folding) of the electronic device 500. According to an example embodiment, the sensor module 530 may be a Hall sensor, an acceleration sensor, and/or a gyro sensor (e.g., a gyroscope), and the acceleration sensor and/or the gyro sensor may detect the folding angle of the electronic device 500. According to an example embodiment, the sensor module 530 may be disposed in the hinge 510 to detect the number of rotations of a gear and detect the folding angle. According to an example embodiment, the sensor module 530 may also detect a folding start point and a folding stop angle, in addition to the folding angle.

For example, the sensor module 530 may be a Hall sensor. The Hall sensor may be a transducer means that generates an electrical signal (e.g., voltage) in response to a magnetic field. The Hall sensor may generate an electrical signal of a relatively high intensity when the magnetic field is strong and may generate an electrical signal of a relatively low intensity when the magnetic field is weak. The Hall sensor may be disposed in a first housing (e.g., the first housing 241 or the first housing 291 of FIG. 2), and a magnetic field generating element (e.g., a magnetic body) may be disposed in a second housing (e.g., the second housing 243 or the second housing 293 of FIG. 2). Depending on implementation, the Hall sensor may be disposed in the second housing (e.g., the second housing 243 or the second housing 293 of FIG. 2), and the magnetic body may be disposed in the first housing (e.g., the first housing 241 or the first housing 291 in FIG. 2). When the electronic device 500 is changed from a fully unfolded state to a folding state, the Hall sensor may approach closer to the magnetic body and detect a folding state of the foldable display 520 in response to a magnetic field of the magnetic body. The Hall sensor may also detect a folding angle through the intensity of an electrical signal generated in response to the magnetic field.

The Hall sensor is provided as an example of the sensor module 530, and the sensor module 530 is not limited to the Hall sensor. According to an example embodiment, the folding angle of the electronic device 500 may be detected using a magnetic (or geomagnetic) sensor and a Hall sensor. For example, the geomagnetic sensor and the Hall sensor may each include a transmitter for generating a magnetic field of a specific frequency and a receiver for receiving the magnetic field generated by the transmitter, and may detect a folding angle based on a change in a state of the electronic device 500 (e.g., a state change based on the states 301, 303, 305, and 307 of FIG. 3 or a state change based on the states 401, 403, and 405 of FIG. 4). For example, the magnetic (or geomagnetic) sensor may measure a bearing using a magnetic field and a magnetic force line, and the Hall sensor may detect the intensity of the magnetic field to verify the state change of the electronic device 500 and detect a folding angle (e.g., the folding angle θ of FIG. 3 in a case of in-folding and the folding angle θ of FIG. 4 in a case of out-folding) according to the verified state change.

Although it has been described above that the sensor module 530 detects the folding state of the foldable display 520 and detects the folding angle, the processor 540 may detect the folding state of the foldable display 520 and calculate the folding angle based on a sensing result of the sensor module 530. For example, the processor 540 may receive, from the Hall sensor, an electrical signal by the detection of the magnetic field. When receiving the electrical signal from the Hall sensor, the processor 540 may detect the folding state of the foldable display 520. The processor 540 may also calculate the folding angle of the foldable display 520 based on the intensity of the electrical signal received from the Hall sensor.

According to an example embodiment, the processor 540 may determine a movement of the electronic device 500 by measuring azimuth, pitch, and roll values of the electronic device 500 based on motion data obtained from the sensor module 530 (e.g., the sensor module 176 of FIG. 1). According to an example embodiment, the motion data may include 3-axis motion data (x1, y1, z1) obtained from an acceleration sensor or include 9-axis motion data obtained by additionally using a gyro sensor and a geomagnetic sensor.

According to an example embodiment, the processor 540 may form a virtual coordinate space based on an azimuth (e.g., yaw, pitch, and/or roll values) measured from the 9-axis motion data. The processor 540 may divide one area of the virtual coordinate space by a table mode range in which the folding axis is substantially parallel to the ground. A table mode may be a mode in which the folding axis of the hinge 510 that distinguishes the first area 521 and the second area 523 of the foldable display 520 is substantially parallel to the ground, and the first area 521 and the second area 523 are divided as an upper area and a lower area with respect to the folding axis.

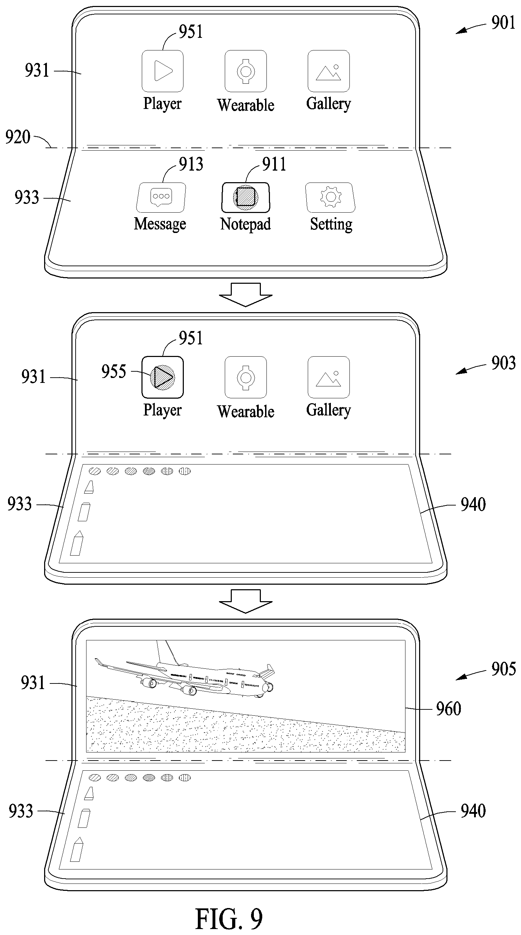

According to an example embodiment, the processor 540 may determine whether the folding axis (e.g., the folding axis 220 or the folding axis 270 of FIG. 2) of the hinge 510 is substantially parallel to the ground. According to an example embodiment, when the folding axis of the electronic device 500 is substantially parallel to the ground and two areas of the foldable display 520 are thus divided as the upper area and the lower area with respect to the folding axis, the processor 540 may determine that the electronic device 500 is in the table mode. An example of providing a multi-window in such a table mode will be described in detail with reference to FIGS. 9 to 12.

According to an example embodiment, the processor 540 may control operations of the electronic device 500 overall. The processor 540 may control an output screen of the foldable display 520.

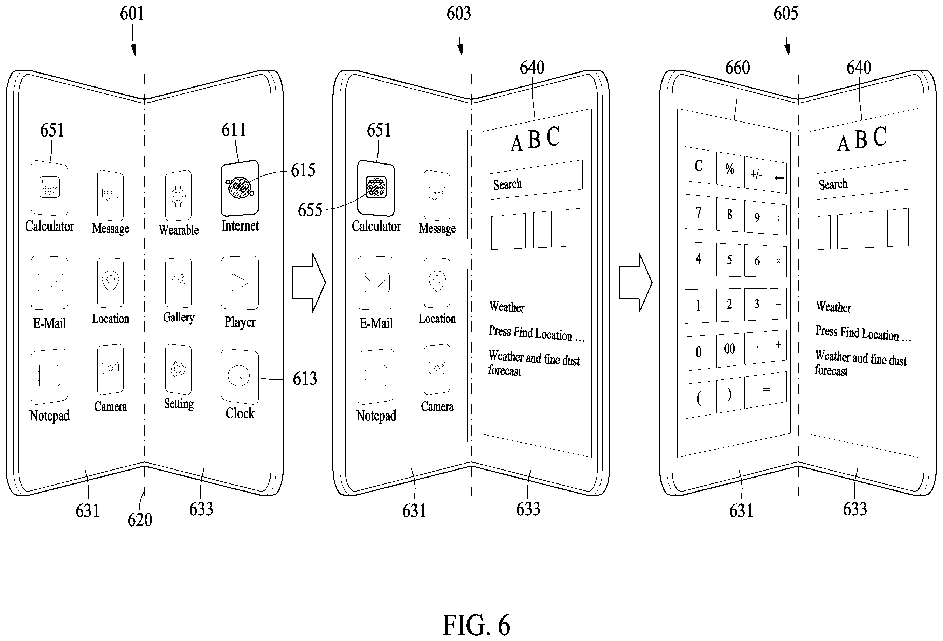

According to an example embodiment, when an execution input for an application is received in a state in which the folding angle is in a predetermined range, the processor 540 may provide an execution screen of the application to a target area that is one of the first area 521 and the second area 523 of the foldable display 520. This will be described in detail below with reference to FIGS. 6 to 8.

According to an example embodiment, when the electronic device 500 is in the table mode and an execution input for an application is provided, the processor 540 may determine the target area based on attribute information of the application. This will be described in detail below with reference to FIG. 9.

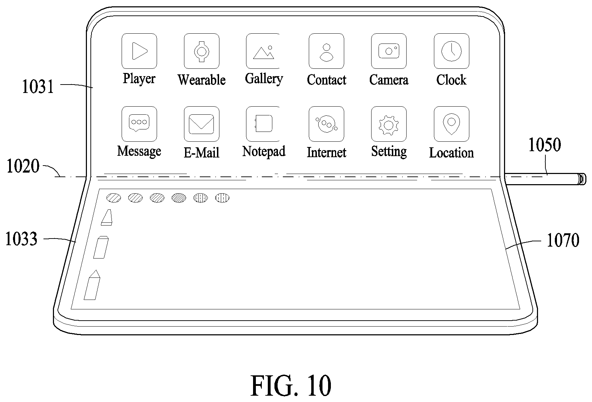

According to an example embodiment, when the electronic device 500 is in table mode and a predetermined event occurs in the electronic device 500, the processor 540 may provide an execution screen of an application having attribute information associated with the event. This will be described in detail below with reference to FIG. 10.

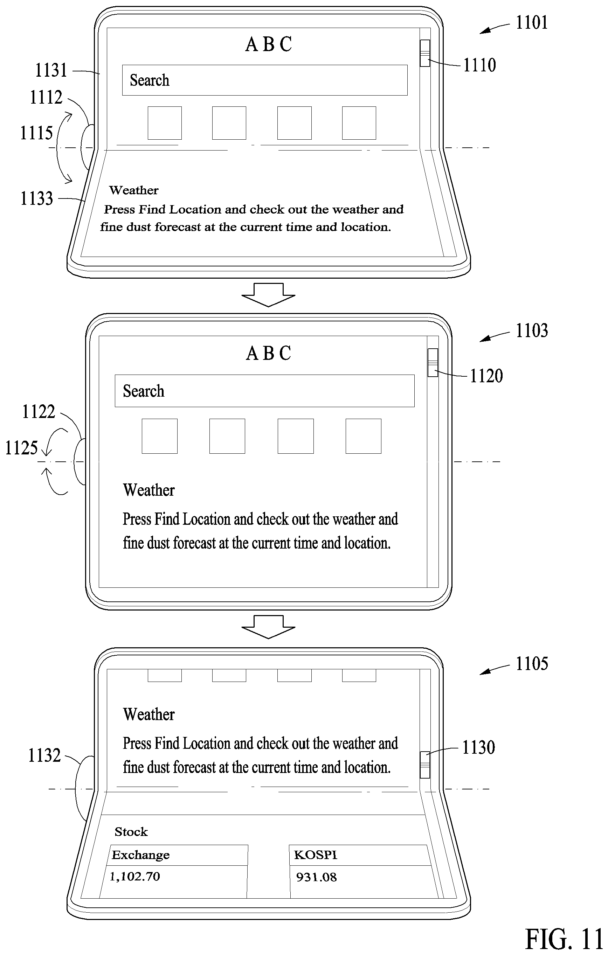

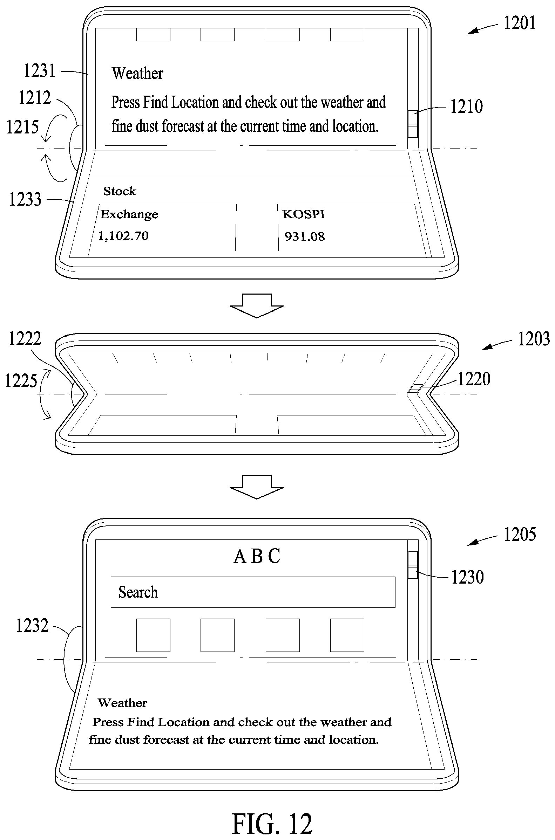

According to an example embodiment, the processor 540 may control an execution screen of an application according to a change in the folding angle detected by the sensor module 530. This will be described in detail below with reference to FIGS. 11 and 12.

According to an example embodiment, the electronic device 500 may include the input module 550 (e.g., the input module 150 of FIG. 1) for a touch input to the foldable display 520. The electronic device 500 may receive an execution input or a drag and drop input for an icon of an application displayed on the foldable display 520 through the input module 550.

According to an example embodiment, the electronic device 500 may include the hinge 510 configured to allow the electronic device 500 to be folded or unfolded, the foldable display 520 disposed on at least one side of the electronic device 500 such that the electronic device 500 is folded or unfolded around the hinge 510, the processor 540 configured to control the output screen of the foldable display 520, the sensor module 530 configured to detect a folding angle of the electronic device 500, and the input module 550 for a touch input to the foldable display 520.

According to an example embodiment, the foldable display 520 may include the first area 521 disposed on one side and the second area 523 disposed on the other side with respect to the hinge 510.

According to an example embodiment, when an execution input for an application is received in a state in which the folding angle is in a predetermined range, the processor 540 may provide an execution screen of the application to a target area that is one of the first area 521 and the second area 523.

According to an example embodiment, when an execution input for a second application different from the application is received while the execution screen of the application is being provided in the state in which the folding angle is in the predetermined range, the processor 540 may further provide an execution screen of the second application to an area other than the target area among the first area 521 and the second area 523.

According to an example embodiment, the processor 540 may determine, as the target area, an area in which an icon of the application is located among the first area 521 and the second area 523.

According to an example embodiment, the processor 540 may determine, as the target area, an area in which the icon of the application is dragged and dropped among the first area 521 and the second area 523.

According to an example embodiment, the processor 540 may provide the execution screen of the application to an entirety of the foldable display 520 including the first area 521 and the second area 523, provide a notification that the execution screen of the application is to be provided to one of the first area 521 and the second area 523 by overlaying the notification on the execution screen of the application, and provide the execution screen of the application to the target area if there is a user input for the notification within a predetermined period of time.

According to an example embodiment, when the electronic device 500 is in the table mode in which the folding axis of the hinge 510 is substantially parallel to the ground, the processor 540 may refer to attribute information of the application in response to receiving an execution input for the application, determine a lower area from the folding axis as the target area among the first area 521 and the second area 523 if it is determined that the attribute information is associated with an input function, and determine an upper area from the folding axis as the target area among the first area 521 and the second area 523 if it is determined that the attribute information is associated with a viewer function.

According to an example embodiment, when detecting an occurrence of a predetermined event in the electronic device 500, the processor 540 may parse a target application having attribute information associated with the event and provide an execution screen of the target application to the target area.

According to an example embodiment, the processor 540 may control the execution screen of the application according to a change in the folding angle detected by the sensor module 530.

FIG. 6 is a diagram illustrating an example of providing a multi-window in an electronic device according to various embodiments.

Referring to FIG. 6, illustrated is an example of providing a multi-window in an electronic device (e.g., the electronic device 101 of FIG. 1 or the electronic device 500 of FIG. 5) in states 601, 603, and 605.

According to an example embodiment, the electronic device may be in a state (e.g., the states 601, 603, and 605) in which a foldable display (e.g., the foldable display 520 of FIG. 5) is folded with respect to a folding axis 620 (e.g., the folding axis 220 of FIG. 2) of a vertical direction.

According to an example embodiment, the foldable display of the electronic device may be divided into a first area 631 (e.g., the first area 331 of FIG. 3 or the first area 521 of FIG. 5) and a second area 633 (e.g., the second area 333 of FIG. 3 or the second area 523 of FIG. 5) by the folding axis 620 of a hinge.

In these folded states 601, 603, and 605, a folding angle (e.g., the folding angle θ of FIG. 3) formed as the first area 631 and the second area 633 are folded may be in a predetermined range, for example, greater than 45° and less than 180°, as shown in the state 303 or the state 305 of FIG. 3). The predetermined range of the folding angle may vary depending on, for example, a folding method and the size of a foldable display. According to an example embodiment, in a case of an out-folding method, a folded state may be a state in which the folding angle (e.g., the folding angle θ of FIG. 4) may be, for example, greater than 180° and less than 315°.

According to an example embodiment, in the state 601, icons of various applications may be positioned in the first area 631 and the second area 633. For example, an icon 651 of a calculator application may be positioned in the first area 631, and an icon 611 of an Internet application and an icon 613 of a clock application may be positioned in the second area 633. When there is an execution input for an application, for example, an execution input 615 for the Internet application, in a state in which the folding angle is within the predetermined range as shown in the state 601, an execution screen of the Internet application may be provided to a target area which is one of the first area 631 and the second area 633.

According to an example embodiment, in the state 603, an execution screen of an application may be provided to an area in which an icon of the application is positioned as a target area. For example, when there is the execution input 615 for the icon 611 of the Internet application in the state 601, the second area 633, which is an area in which the icon 611 of the Internet application was positioned, may be provided as the target area to which an execution screen 640 of the Internet application is to be provided. In the states 601, 603, and 605, the target area may be the second area 633.

When an execution screen is provided in the target area, the positions of icons of other applications that were positioned in the target area may change according to various embodiments.

According to an example embodiment, when an execution screen is provided in the target area, icons of other applications that were positioned in the target area may appear by swiping in an area that is not the target area. For example, when the execution screen 640 of the Internet application is provided in the second area 633 in the state 603, an icon of another application that was positioned in an area (e.g., the first area 631) that is not the target area in the state 601, for example, the icon 651 of the calculator application, may be positioned in the first area 631 in the same manner as in the state 601. An icon of another application that was positioned in the target area (e.g., the second area 633) in the state 601, for example, the icon 613 of the clock application, may appear by swiping leftward in the first area 631 which is not the target area. According to an example embodiment, by user's operation of swiping leftward in the first area 631, icons of applications (e.g., an icon of a wearable application, an icon of a gallery application, an icon of a media player application, an icon of a setting application, and the icon 613 of the clock application) that were present in the second area 633 in the state 601, excluding the application (e.g., the Internet application icon 611) for which the execution screen is being provided, may appear in the first area 631 in the same arrangement as in the second area 633 in the state 601.

According to an example embodiment, when an execution screen is provided in the target area, a processor (e.g., the processor 540 of FIG. 5) of the electronic device may arrange an icon of another application that was previously positioned in the target area, in an area that is not the target area. For example, icons of all other applications (e.g., an icon of a wearable application, an icon of a gallery application, an icon of a media player application, an icon of a setting application, and the icon 613 of the clock application) that were positioned in the target area (e.g., second area 633) in the state 603 may be reduced in size and positioned in an area (e.g., first area 631) that is not the target area, along with icons of applications (e.g., the icon 651 of the calculator application, an icon of a messaging application, an icon of an e-mail application, an icon of a location application, an icon of a notepad application, and an icon of a camera application) that were positioned in the area (e.g., first area 631) that is not the target area (not shown).

According to an example embodiment, in the state 605, when the folding angle is within the predetermined range and there is an execution input for another second application while an execution screen of an application is being provided, an execution screen of the second application may be provided in the first area 631 that is not the target area among the first area 631 and the second area 633. For example, when an execution input for a second application, for example, an execution input 655 for the icon 651 of the calculator application, is received in the state 603, while the folding angle is within the predetermined range and the execution screen 640 of the Internet application is being provided in the second area 633, an execution screen 660 of the calculator application may be provided in the first area 631.

Although the electronic device is illustrated as having the folding axis 620 (e.g., the folding axis 220 of FIG. 2) of a vertical direction operating in an in-folding method, examples are not limited thereto. For example, even in a case in which a folding axis is in a horizontal direction and operates in the in-folding method (as shown in the electronic device 260 of FIG. 2, for example) or a case in which the folding axis is in a vertical or horizontal direction and operates in an out-folding method (as shown in the electronic device 400 of FIG. 4, for example), the electronic device may also provide a multi-window in the same manner as described above.

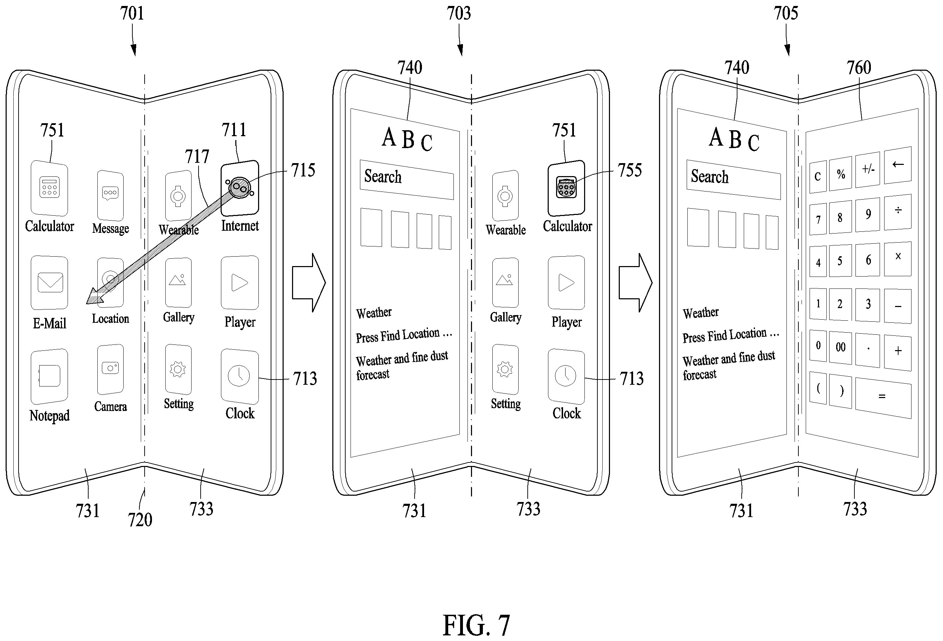

FIG. 7 is a diagram illustrating an example of providing a multi-window in an electronic device when a user drags and drops an icon of an application according to various embodiments.

Referring to FIG. 7, illustrated is an example of providing a multi-window by an electronic device (e.g., the electronic device 101 of FIG. 1 or the electronic device 500 of FIG. 5) in states 701, 703, and 705.

According to an example embodiment, as described above with reference to FIG. 6, the electronic device may be in a state (e.g., state 701, state 703, and state 705) in which a foldable display (e.g., the foldable display 520 of FIG. 5) is folded with respect to a folding axis 720 (e.g., the folding axis 220 of FIG. 2) of a vertical direction. The foldable display of the electronic device may be divided into a first area 731 (e.g., the first area 331 of FIG. 3 or the first area 521 of FIG. 5) and a second area 733 (e.g., the second area 333 of FIG. 3 or the second area 523 of FIG. 5) by the folding axis 720 of a hinge.

According to an example embodiment, in the state 701, as described in relation to the state 601 of FIG. 6, icons of various applications may be positioned in the first area 731 and the second area 733.

For example, when an icon 711 of an Internet application is clicked (e.g., click 715) and dragged and dropped (e.g., drag and drop operation 717) in the state 701, an execution screen may be provided through a multi-window.

According to an example embodiment, in the state 703, an execution screen of an application may be provided in an area in which an icon of the application is dragged and dropped, as a target area. For example, when the icon 711 of the Internet application is clicked (e.g., click 715) and dragged and dropped into the first area 731 in the state 701, the first area 731 of the Internet application may be provided as the target area and an execution screen 740 of the Internet application may be provided in the first area 731. In the states 701, 703, and 705, the target area may be the first area 731.

When an execution screen is provided in a target area, positions of icons of other applications previously positioned in the target area may be changed according to various embodiments.

According to an example embodiment, as described above with reference to FIG. 6, when an execution screen is provided in a target area, icons of other applications previously positioned in the target area may appear by swiping in an area that is not the target area. For example, when the execution screen 740 of the Internet application is provided in the first area 731 in the state 703, an icon of another application previously positioned in an area (e.g., second area 733) that is not the target area in the state 701, for example, an icon 713 of a clock application, may be positioned in the second area 733 in the same manner as in the state 701. An icon of another application previously positioned in the target area (e.g., first area 731) in the state 701, for example, an icon 751 of a calculator application, may appear by swiping rightward in the second area 733 which is not the target area. According to an example embodiment, by user's operation of swiping rightward in the second area 733, icons of applications (e.g., the icon 751 of the calculator application, an icon of a messaging application, an icon of an e-mail application, an icon of a location application, an icon of a notepad application, and an icon of a camera application) that were present in the first area 731 in the state 701, may appear in the second area 733 in the same arrangement as in the first area 731 in the state 701.

According to an example embodiment, as described above with reference to FIG. 6, when an execution screen is provided in a target area, icons of other applications previously positioned in the target area may be positioned in an area that is not the target area. For example, when the execution screen 740 of the Internet application is provided in the first area 731 in the state 703, any one of icons of other applications previously positioned in the target area (e.g., first area 731) in the state 701, for example, the icon 751 of the calculator application, may be arranged at a position at which the icon 711 of the Internet application for which the execution screen is being provided was positioned in the second area 733 which is not the target area, as shown in the icon 751 of the calculator application in the state 703, for example.

According to an example embodiment, icons (e.g., the icon 751 of the calculator application, an icon of the messaging application, and an icon of the e-mail application) of all other applications previously positioned in the target area (e.g., first area 731) may be reduced in size, and may be arranged in an area (e.g., second area 733) that is not the target area, along with icons (e.g., the icon 713 of the clock application, an icon of a setting application, and an icon of a gallery application) of applications previously positioned in the area (e.g., second area 733) that is not the target area (not shown).

According to an example embodiment, in the state 705, when the folding angle is within a predetermined range and there is an execution input for another second application while an execution screen of an application is being provided, an execution screen of the second application may be provided in the second area 733 that is not the target area among the first area 731 and the second area 733. For example, when an execution input for a second application, for example, an execution input 755 for the icon 751 of the calculator application in the state 703, is received, while the folding angle is within the predetermined range and the execution screen 740 of the Internet application is being provided in the first area 731, an execution screen 760 of the calculator application may be provided in the second area 733 which is not the target area.

Although the electronic device is illustrated as having the folding axis 720 (e.g., the folding axis 220 of FIG. 2) in a vertical direction and operating in an in-folding method, examples are not limited thereto. For example, even in a case in which a folding axis is in a horizontal direction and the in-folding method is applied (as shown in the electronic device 260 of FIG. 2, for example) or a case in which the folding axis is in a vertical or horizontal direction and an out-folding method is applied (as shown in the electronic device 400 of FIG. 4, for example), the electronic device may also provide a multi-window in the same manner as described above.

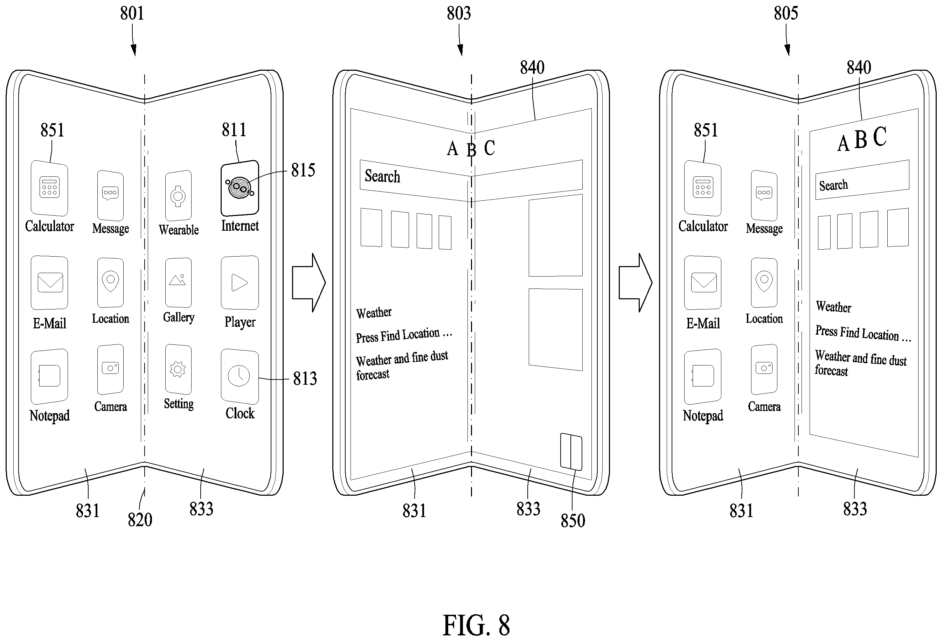

FIG. 8 is a diagram illustrating an example of providing a notification icon by an electronic device before providing a multi-window according to various embodiments.

Referring to FIG. 8, illustrated is an example of providing a notification icon before providing a multi-window in an electronic device (e.g., the electronic device 101 of FIG. 1 or the electronic device 500 of FIG. 5) in states 801, 803, and 805.

According to an example embodiment, as described above with reference to FIG. 6, the electronic device may be in a state (e.g., state 801, state 803, and state 805) in which a foldable display (e.g., the foldable display 520 of FIG. 5) is folded with respect to a folding axis 820 (e.g., the folding axis 220 of FIG. 2) of a vertical direction. The foldable display of the electronic device may be divided into a first area 831 (e.g., the first area 331 of FIG. 3 or the first area 521 of FIG. 5) and a second area 833 (e.g., the second area 333 of FIG. 3 or the second area 523 of FIG. 5) by the folding axis 820 of a hinge.

According to an example embodiment, in the state 801, icons of various applications may be positioned in the first area 831 and the second area 833.

According to an example embodiment, when there is an execution input for an application, for example, an execution input 815 for an Internet application, in a state in which a folding angle is within a predetermined range, as in the state 801, an execution screen of the Internet application may be provided in a target area which is one of the first area 831 and the second area 833.

According to an example embodiment, in the state 803, before the execution screen of the Internet application is provided in the target area, an execution screen 840 of the Internet application may be fully provided in the entire foldable display including the first area 831 and the second area 833. A processor (e.g., the processor 120 of FIG. 1 or the processor 540 of FIG. 5) of the electronic device (e.g., the electronic device 101 of FIG. 1 or the electronic device 500 of FIG. 5) may provide a notification icon850 that the execution screen is to be provided in one area between the first area 831 and the second area 833 by overlaying the notification icon 850 on the execution screen 840, while providing the execution screen 840 in the entire foldable display.

According to an example embodiment, if there is a user input to the notification icon 850 within a predetermined period of time in the state 803, the execution screen 840 of the Internet application may be provided in the target area that is one of the first area 831 and the second area 833, as shown in the state 805. According to an example embodiment, the target area may be the second area 833 in which an icon 811 of the Internet application was previously positioned, as described above with reference to FIG. 6. According to an example embodiment, in an area (e.g., first area 831) that is not the target area, icons of applications (e.g., icon 851 of a calculator application, an icon of a messaging application, an icon of an e-mail application, an icon of a location application, an icon of a notepad application, and an icon of a camera application) previously positioned in the area (e.g., first area 831) in the state 801 may be positioned in the same positions that they were arranged (as shown in the first area 831 in the state 805, for example).

As described above with reference to FIGS. 6 and 7, a position of an icon of an application previously positioned in the target area may be variously implemented.

According to an example embodiment, an icon (e.g., an icon 813 of a clock application) of another application previously positioned in the target area (e.g., second area 833) in the state 801 may appear by swiping leftward in an area (e.g., first area 831) that is not the target area (not shown). According to an example embodiment, it may be arranged in the area (e.g., first area 831) that is not the target area, along with icons (e.g., the icon 851 of the calculator application) of other applications positioned in the area (e.g., first area 831) that is not the target area, with the reduced icon size (not shown).

According to an example embodiment, as described above with reference to FIG. 6, when an execution input for another application (e.g., a user input to the icon 851 of the calculator application) is received, after the execution screen 840 of the Internet application is provided in the target area in the state 805, an execution screen of the corresponding application may be provided in an area (e.g., first area 831) that is not the target area (not shown).

According to an example embodiment, when there is no user input to the notification icon 850 within the predetermined period of time in the state 803, the notification icon 850 may disappear and an execution screen of an application may be fully provided over the entire foldable display including the first area 831 and the second area 835, as shown in the state 803. According to an example embodiment, when the electronic device (e.g., the electronic device 101 of FIG. 1 or the electronic device 500 of FIG. 5) continues to be in a folding state (e.g., the state 303 of FIG. 3 or the state 403 of FIG. 4), the notification icon 850 may be continuously displayed. According to an example embodiment, when the electronic device switches from the folding state (e.g., the state 303 of FIG. 3 or the state 403 of FIG. 4) to a fully unfolded state (e.g., the state 301 of FIG. 3 or the state 401 of FIG. 4), the notification icon 850 may disappear.

Although the electronic device is illustrated as having the folding axis 820 (e.g., the folding axis 220 of FIG. 2) in a vertical direction and operating in an in-folding method, examples are not limited thereto. For example, even in a case in which a folding axis is in a horizontal direction and the in-folding method is applied (as shown in the electronic device 260 of FIG. 2, for example) or a case in which the folding axis is in a vertical or horizontal direction and an out-folding method is applied (as shown in the electronic device 400 of FIG. 4, for example), the electronic device may also provide a multi-window in the same manner as described above.

FIG. 9 is a diagram illustrating an example of providing a multi-window when an electronic device is in a table mode according to various embodiments.

Referring to FIG. 9, illustrated is an example of providing a multi-window when an electronic device (e.g., the electronic device 101 of FIG. 1 or the electronic device 500 of FIG. 5) is in a table mode in states 901, 903, and 905.

According to an example embodiment, the electronic device may be in a state (e.g., state 901, state 903, and state 905) in which a foldable display (e.g., the foldable display 520 of FIG. 5) is folded with respect to a folding axis 920 (e.g., the folding axis 270 of FIG. 2) of a horizontal direction. The foldable display of the electronic device may be divided into a first area 931 (e.g., the first area 331 of FIG. 3 or the first area 521 of FIG. 5) and a second area 933 (e.g., the second area 333 of FIG. 3 or the second area 523 of FIG. 5) by the folding axis 920 of a hinge.

According to an example embodiment, as described above with reference to FIG. 5, a processor (e.g., the processor 540 of FIG. 5) of the electronic device may determine whether the folding axis 920 is substantially parallel to the ground, and whether the first area 931 and the second area 933 are divided into an upper area and a lower area with respect to the folding axis 920. Although the states 901, 903, and 905 are to be described in relation to the table mode in which the electronic device (e.g., the electronic device 210 of FIG. 2) having a vertical folding axis is rotated and the folding axis is substantially parallel to the ground, examples are not limited thereto. For example, for an electronic device (e.g., the electronic device 260 of FIG. 2) having a horizontal folding axis, a state in which the electronic device is not rotated may be a state in which the folding axis is substantially parallel to the ground, and thus the processor (e.g., the processor 540 of FIG. 5) of the electronic device may determine such a state without the rotation to be the table mode.

According to an example embodiment, in the state 901, icons of various applications may be positioned in the first area 931 and the second area 933. According to an example embodiment, in a state in which a folding angle is within a predetermined range and the electronic device is in the table mode as shown in the state 901, the processor (e.g., the processor 540 of FIG. 5) of the electronic device may refer to attribute information of a notepad application, for example. For example, attribute information of applications such as notepad and messaging may be associated with an input function, and attribute information of applications such as media player and gallery may be associated with a viewer function.

According to an example embodiment, when determining that the electronic device is in the table mode in which the folding axis is substantially parallel to the ground, the processor (e.g., the processor 540 of FIG. 5) of the electronic device may arrange icons of applications according to application attribute information. For example, an icon 951 of the media player application may be positioned in the first area 931, and an icon 911 of the notepad application and an icon 913 of the messaging application may be positioned in the second area 933.

According to an example embodiment, when determining that attribute information of an application for which an execution input is received is associated with the input function by referring to the attribute information of the application in the state 903, the processor (e.g., the processor 540 of FIG. 5) of the electronic device may determine the lower area from the folding axis 920 to be a target area among the first area 931 and the second area 933 and provide an execution screen in the target area. According to an example embodiment, when receiving an execution input for the notepad application 911, the processor may provide an execution screen 940 in the second area 933 that is the lower area from the folding axis 920.

According to an example embodiment, when determining that attribute information of an application (e.g., the media player application 951) for which an execution input is received is associated with the viewer function in the state 903, the processor of the electronic device may determine the first area 931 that is the upper area from the folding axis 920 to be the target area and provide an execution screen in the target area.

A position of an icon of an application previously positioned in the target area may be determined according to various embodiments as described above with reference to FIGS. 6 and 7.

According to an example embodiment, an icon of another application (e.g., the icon 913 of the messaging application) previously positioned in the target area (e.g., second area 933) in the state 901 may appear by swiping upward in an area (e.g., first area 931) that is not the target area (not shown). According to an example embodiment, the icon of the application may be reduced in size and be positioned in the area (e.g., first area 931) that is not the target area, along with icons (e.g., the icon 951 of the media player application) of other applications previously positioned in the area (e.g., first area 931) that is not the target area (not shown).

According to an example embodiment, as described above with reference to FIG. 6, when an execution input 955 for another application (e.g., the media player application 951) is received after the execution screen 940 of the notepad application is provided in the target area (e.g., second area 933) in the state 903, an execution screen 960 of the corresponding application may be provided in an area (e.g., first area 931) that is not the target area.

According to an example embodiment, as described above with reference to FIG. 7, even in the table mode, an area in which an icon of an application is dragged and dropped may be determined to be the target area and an execution screen of the application may be provided in the target area (not shown).

According to an example embodiment, as described above with reference to FIG. 8, even in the table mode, the processor (e.g., the processor 540 of FIG. 5) of the electronic device may provide an execution screen of an application for which an execution input is received to an entirety of the foldable display including the first area 931 and the second area 933, and may provide a notification that the execution screen is to be provided by overlaying the notification on any one of the first area 931 and the second area 933 (not shown). If there is a user input for the notification within a predetermined period of time, the execution screen may be provided in the target area. When there is no user input for the notification within the predetermined period of time, the notification may disappear, and the execution screen may continue to be provided in the entirety of the foldable display including the first area 931 and the second area 933.

FIG. 10 is a diagram illustrating an example of providing a multi-window when there is a change in a state of an electronic device according to various embodiments.

A repeated description of what has been described above in relation to the table mode with reference to FIG. 9 will be omitted from what is to be described hereinafter with reference to FIGS. 10 to 12.

Referring to FIG. 10, illustrated is an example of providing a multi-window according to a change in a state of an electronic device (e.g., the electronic device 101 of FIG. 1 or the electronic device 500 of FIG. 5) when the electronic device is in a table mode.

According to an example embodiment, the electronic device may be in a state in which a foldable display (e.g., the foldable display 520 of FIG. 5) is folded with respect to a folding axis 1020 (e.g., the folding axis 270 of FIG. 2) of a horizontal direction. The foldable display may be divided into a first area 1031 (e.g., the first area 331 of FIG. 3 or the first area 521 of FIG. 5) and a second area 1033 (e.g., the second area 333 of FIG. 3 or the second area 523 of FIG. 5) with respect to the folding axis 1020 of a hinge.

According to an example embodiment, as described above with reference to FIG. 5, when the folding axis 1020 is substantially parallel to the ground and the first area 1031 and the second area 1033 are divided into an upper area and a lower area by the folding axis 1020, a processor (e.g., the processor 540 of FIG. 5) of the electronic device may determine that the electronic device is in the table mode.

According to an example embodiment, icons of various applications may be arranged in the first area 1031 and the second area 1033. According to an example embodiment, in a state in which a folding angle is within a predetermined range and the electronic device is in the table mode, the processor (e.g., the processor 540 of FIG. 5) of the electronic device may refer to attribute information of a notepad application, for example. For example, attribute information of applications such as notepad and messaging may be associated with an input function, and attribute information of applications such as media player and gallery may be associated with a viewer function.

According to an example embodiment, when detecting an occurrence of a predetermined event (e.g., an event 1050 of taking out a pen) in the electronic device, the processor (e.g., the processor 540 of FIG. 5) of the electronic device may parse a target application having application attribute information associated with the event. For example, when detecting the event 1050 of taking out the pen, the processor may parse the notepad application having application attribute information associated with the event 1050 of taking out the pen, for example, the input function.

According to an example embodiment, the processor may provide an execution screen of the parsed application to a target area. According to an example embodiment, when the parsed application is the notepad application, application attribute information may be associated with the input function, and thus the target area may be determined to be the second area 1033 that is the lower area from the folding axis 1020, as described above with reference to FIG. 9. The processor may then provide an execution screen 1070 of the notepad application in the second area 1033.

According to an example embodiment, as described above with reference to FIG. 8, the execution screen 1070 of the notepad application may be fully provided in an entirety of the foldable display including the first area 1031 and the second area 1033, and a notification that an execution screen is to be provided in any one of the first area 1031 and the second area 1033 may be provided by overlaying the notification (not shown). In this case, if there is a user input for the notification within a predetermined period of time, the execution screen may be provided in the target area. When there is no user input for the notification within the predetermined period of time, the notification may disappear, and the execution screen may continue to be provided in the entirety of the foldable display including the first area 1031 and the second area 1033.

A position of an icon of an application previously positioned in the target area may be variously implemented as described above with reference to FIGS. 6 and 7.

According to an example embodiment, as described above with reference to FIG. 9, when an execution input for another application (e.g., a clock application) is received after the execution screen 1070 of the notepad application is provided in the target area (e.g., second area 1033), an execution screen of the corresponding application may be provided in an area (e.g., first area 1031) that is not the target area (not shown).

FIG. 11 is a diagram illustrating an example of controlling an execution screen of an application according to a change in a folding angle of an electronic device according to various embodiments.

Referring to FIG. 11, illustrated is an example of controlling an execution screen of an application in states 1101, 1103, and 1105 when an electronic device (e.g., the electronic device 101 of FIG. 1 or the electronic device 500 of FIG. 5) is in a table mode.

According to an example embodiment, in the states 1101, 1103, and 1105, a foldable display may be divided into a first area 1131 and a second area 1133 by a folding axis. According to an example embodiment, in the states 1101, 1103, and 1105, the electronic device may be in the table mode in which the folding axis is substantially parallel to the ground and the first area 1131 and the second area 1133 are divided into an upper area and a lower area by the folding axis, as described above with reference to FIG. 9. What has been described above with reference to FIGS. 1 to 10 will be omitted here.

According to an example embodiment, in a state in which a folding angle is within a predetermined range and the electronic device is in the table mode, a processor (e.g., the processor 540 of FIG. 5) of the electronic device may control an execution screen of an application that is being provided according to a change in the folding angle.

According to an example embodiment, in the state 1101, the processor of the electronic device may detect a folding angle 1112, as described above in relation to the sensor module 530 of FIG. 5. According to an example embodiment, when a user unfolds (e.g., a case 1115) the electronic device to increase a folding angle and then folds (e.g., a case 1125) to decrease the folding angle in the state 1101, the processor of the electronic device may control an execution screen of an application that is being provided.

According to an example embodiment, in the case 1115 in which the user unfolds the electronic device to increase the folding angle, the folding angle 1112 may become greater to be a folding angle 1122, and in the case 1125 in which the user folds the electronic device to decrease the folding angle, the folding angle 1122 may become smaller to be a folding angle 1132.

According to an example embodiment, when detecting a change in the folding angle from increasing (i.e., a change from the state 1101 to the state 1103) to decreasing (i.e., a change from the state 1103 to the state 1105), the processor may control the execution screen of the application that is being provided to be scrolled down. For example, a scroll 1110 in the state 1101 may move down, as shown in a scroll 1130 in the state 1105, by passing the state 1103.

FIG. 12 is a diagram illustrating an example of controlling an execution screen of an application according to a change in a folding angle of an electronic device according to various embodiments.

Referring to FIG. 12, illustrated is an example of controlling an execution screen of an application in states 1201, 1203, and 1205 when an electronic device (e.g., the electronic device 101 of FIG. 1 or the electronic device 500 of FIG. 5) is in a table mode.

FIG. 12 illustrates an example in which a folding angle is changed differently in the same situation illustrated in FIG. 11, and thus a repeated description of what has been described above with reference to FIG. 11 will be omitted here.

According to an example embodiment, in the state 1201, a processor of the electronic device may detect a folding angle 1212 as described above in relation to the sensor module 530 of FIG. 5. According to an example embodiment, when a user folds (e.g., a case 1215) the electronic device to decrease a folding angle and then unfolds (e.g., a case 1225) the electronic device to increase the folding angle in the state 1201, the processor of the electronic device may control an execution screen of an application that is being provided.

According to an example embodiment, in the case 1215 in which the user folds the electronic device to decrease the folding angle, the folding angle 1212 may become smaller to be a folding angle 1222, and in the case 1225 in which the user unfolds the electronic device to increase the folding angle, the folding angle 1222 may become greater to be a folding angle 1232.

According to an example embodiment, when detecting a change in the folding angle from decreasing (i.e., a change from the state 1201 to the state 1203) to increasing (i.e., a change from the state 1203 to the state 1205), the processor may control the execution screen of the application that is being provided to be scrolled up. For example, a scroll 1210 in the state 1201 may move up, as shown in a scroll 1230 in the state 1205, by passing the state 1203.

According to an example embodiment, an operation of the processor is not limited to the examples described above with reference to FIGS. 11 and 12, and the processor of the electronic device may control an execution screen differently according to a change in a folding angle. For example, although it has been described above with reference to FIG. 11 that the processor controls a scroll to move down when the folding angle increases and then decreases, and described above with reference to FIG. 12 that the processor controls the scroll to move up when the folding angle decreases and then increases, the processor may also control a movement direction of the screen to be opposite. According to an example embodiment, the processor may control an execution screen of an application that is being provided such that the scroll moves up when it detects a change in the folding angle from increasing to decreasing, and that the scroll moves down when it detects a change in the folding angle from decreasing to increasing.

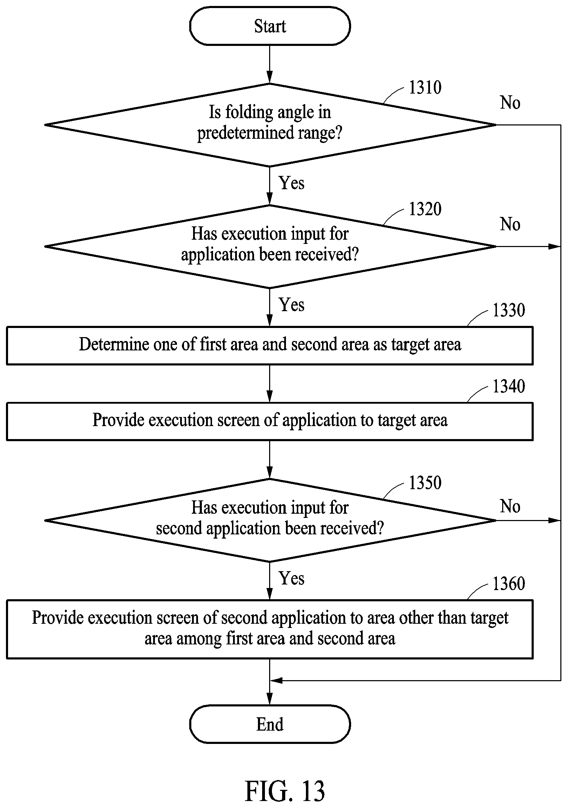

FIG. 13 is a flowchart illustrating a method of providing a multi-window by an electronic device according to various embodiments.

What has been described above with reference to FIGS. 1 to 12 will be omitted from the description to be provided below with reference to FIGS. 13 to 16.

According to an example embodiment, in operation 1310, a processor (e.g., the processor 540 of FIG. 5) of an electronic device (e.g., the electronic device 500 of FIG. 5) may detect a folding angle to determine whether it is in a predetermined range. As described above with reference to FIG. 5, the processor may detect the folding angle formed between a first area (e.g., the first area 521 of FIG. 5) and a second area (e.g., the second area 523 of FIG. 5) of a foldable display (e.g., the foldable display 520 of FIG. 5) through a sensor module (e.g., the sensor module 530 of FIG. 5).

According to an example embodiment, in operation 1320, the processor may receive an execution input for an application when the electronic device is in a folding state. As described above with reference to FIG. 5, the execution input for the application may be received through an input module (e.g., the input module 550 of FIG. 5).

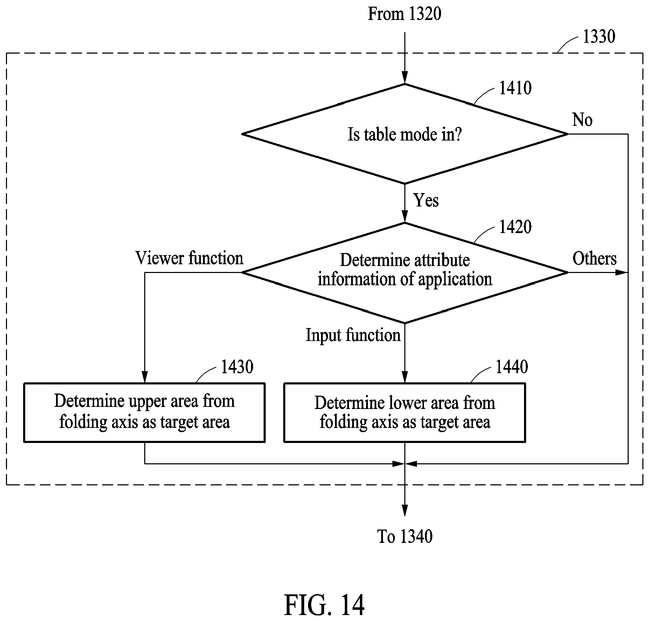

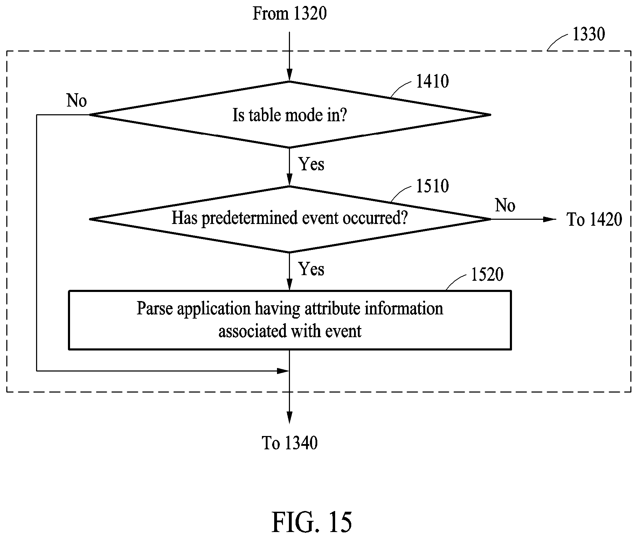

According to an example embodiment, in operation 1330, the processor may determine, as a target area, one of the first area and the second area of the foldable display. According to an example embodiment, as described above with reference to FIG. 6, the processor may determine, as the target area, an area in which an icon of the application for which the execution input is received is positioned. According to an example embodiment, as described above with reference to FIG. 7, the processor may determine, as the target area, an area in which the icon of the application to be executed is dragged and then dropped. According to an example embodiment, as described above with reference to FIG. 9, in a case of a table mode, the processor may determine the target area based on attribute information of the application, which will be described in detail below with reference to FIG. 14. According to an example embodiment, as described above with reference to FIG. 10, when a predetermined event occurs, the processor may parse an application having attribute information associated with the event and provide an execution screen of the application to the target area, which will be described in detail below in FIG. 15.

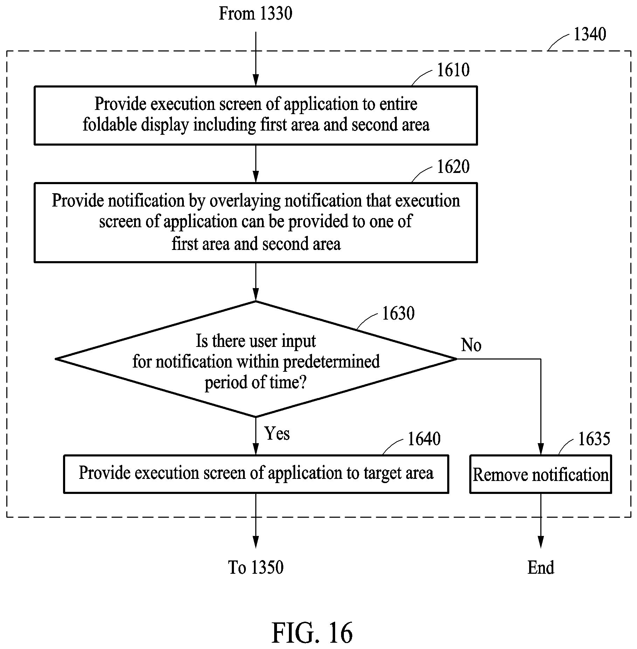

According to an example embodiment, in operation 1340, the processor may provide the execution screen of the application to the target area. According to an example embodiment, at least some of applications for which their execution screen is not provided may be displayed in an area that is not the target area. According to an example embodiment, as described above with reference to FIG. 8, the processor may provide the execution screen to an entirety of the foldable display including the first area and the second area, and may provide the execution screen overlaid with a notification that the execution screen is to be provided, on a multi-window, to the target area that is one of the first area and the second area, which will be described in detail below with reference to FIG. 16.

According to an example embodiment, when receiving an execution input for a second application that is another application in operation 1350, the processor may provide an execution screen of the second application to an area other than the target area among the first area and the second area in operation 1360, as described above with reference to FIG. 6.

FIG. 14 is a flowchart illustrating a method of providing a multi-window when an electronic device is in a table mode according to various embodiments.

According to an example embodiment, in relation to operation 1330 of determining a target area by the processor of the electronic device, FIG. 14 illustrates a flowchart of related operations performed in a case of a table mode.

According to an example embodiment, in operation 1410, the processor may determine whether the electronic device is in table mode. As described above with reference to FIG. 5, the processor (e.g., the processor 540 of FIG. 5) of the electronic device may detect whether a folding axis is substantially parallel to the ground and a first area (e.g., the first area 521 of FIG. 5) and a second area (e.g., the second area 523 of FIG. 5) of a foldable display (e.g., the foldable display 520 of FIG. 5) are divided into an upper area and a lower area by the folding axis, through a sensor module (e.g., the sensor module 530 of FIG. 5), and may determine the table mode when the electronic device is in such a state.

According to an example embodiment, when determining that the electronic device is in the table mode in operation 1410, the processor may determine attribute information of an application for which an execution input is received, in operation 1420. According to an example embodiment, as described above with reference to FIG. 9, the processor may determine the attribute information of the application for which the execution input is received. For example, attribute information of applications such as notepad and messaging may be determined to be associated with an input function, and attribute information of applications such as media player and gallery may be determined to be associated with a viewer function.

According to one embodiment, when determining that the attribution information of the application (e.g., a media player application) for which the execution input is received is associated with the viewer function in operation 1420, the processor may determine the upper area from the folding axis to be the target area among the first area and the second, in operation 1430.

According to an example embodiment, when determining that the attribution information of the application for which the execution input is received is associated with the input function in operation 1420, the processor may determine the lower area from the folding axis to be the target area among the first area and the second, in operation 1440.

FIG. 15 is a flowchart illustrating a method of providing a multi-window when an event is detected to occur in an electronic device according to various embodiments.

According to an example embodiment, FIG. 15 illustrates a flowchart of related operations performed when the processor of the electronic device detects an occurrence of a predetermined event in the electronic device.

According to an example embodiment, the processor may determine whether the electronic device is in the table mode in operation 1410 as described above with reference to FIG. 14.

According to an example embodiment, when determining that the electronic device is in the table mode in operation 1410, the processor may determine whether a predetermined event has occurred as an execution input in the electronic device, in operation 1510. According to an example embodiment, as described above with reference to FIG. 10, the processor may detect the occurrence of the predetermined event, for example, taking out a pen.

According to an example embodiment, in operation 1520, the processor may parse an application having attribute information associated with the event. For example, when detecting that the pen is taken out, the processor may parse a notepad application having attribute information associated with an input function, and determine a target area based on the attribute information as described above with reference to FIG. 14.

FIG. 16 is a flowchart illustrating a method of providing a notification icon before providing a multi-window by an electronic device according to various embodiments.

According to an example embodiment, in relation to operation 1340 of providing an execution screen of an application by the processor of the electronic device, FIG. 16 illustrates a flowchart of related operations of providing a notification icon.

According to an example embodiment, as described above with reference to FIG. 8, in operation 1610, before providing an execution screen of an Internet application to a target area, the processor may provide the execution screen of the application to an entirety of the foldable display including the first area and the second area.

According to an example embodiment, in operation 1620, the processor may provide a notification that the execution screen is to be provided to one of the first area and the second area by overlying the notification on the execution screen, while providing the execution screen to the entirety of the foldable display.

According to an example embodiment, if there is a user input for the notification within a predetermined period of time in operation 1630, the processor may provide the execution screen of the application to the target area that is one of the first area and the second area in operation 1640. According to an example embodiment, the user input for the notification may be received through an input module (e.g., the input module 550 of FIG. 5).

According to an example embodiment, when there is no user input for the notification within the predetermined period of time in operation 1630, the notification may disappear and the execution screen of the application may be provided over the foldable display covering the entirety of the first area and the second area, in operation 1635.

According to an example embodiment, the electronic device 500 may include: the hinge 510 configured to allow the electronic device 500 to be folded or unfolded; the foldable display 520 disposed on at least one side of the electronic device 500 such that the electronic device 500 is folded or unfolded around the hinge 510; the processor 540 configured to control an output screen of the foldable display 520; the sensor module 530 configured to detect a folding angle of the electronic device 500; and the input module 550 for a touch input to the foldable display 520, wherein the foldable display 520 may include the first area 521 disposed on one side and the second area 523 disposed on the other side with respect to the hinge 510.

According to an example embodiment, when an execution input for an application is received (e.g., operation 1320) in a state in which the folding angle is in a predetermined range (e.g., operation 1310), the processor 540 may provide an execution screen of the application to a target area (e.g., operation 1330) that is one of the first area 521 and the second area 523 (e.g., operation 1340).

According to an example embodiment, when an execution input for a second application different from the application is received (e.g., operation 1350) while the execution screen of the application is being provided (e.g., operation 1340) in the state where the folding angle is in the predetermined range, the processor 540 may provide an execution screen of the second application to an area other than the target area among the first area 521 and the second area 523 (e.g., operation 1360).

According to an example embodiment, the processor 540 may determine, as the target area, an area in which an icon of the application is positioned among the first area 521 and the second area 523.

According to an example embodiment, the processor 540 may determine, as the target area, an area in which the icon of the application is dragged and dropped among the first area 521 and the second area 523.

According to an example embodiment, the processor 540 may provide the execution screen of the application to an entirety of the foldable display 520 including the first area 521 and the second area 523 (e.g., operation 1610).

According to an example embodiment, the processor 540 may provide a notification that the execution screen of the application is to be provided to one of the first area 521 and the second area 523 by overlaying the notification on the execution screen of the application (e.g., operation 1620).

According to an example embodiment, if there is a user input for the notification within a predetermined period of time (e.g., operation 1630), the processor 540 may provide the execution screen of the application to the target area (e.g., operation 1640).

According to an example embodiment, when the electronic device 500 is in a table mode in which the folding axis of the hinge 510 is substantially parallel to the ground (e.g., operation 1410), the processor 540 may refer to attribute information of an application for which an execution input is received (e.g., operation 1420).

According to an example embodiment, when determining that the attribution information is associated with an input function, the processor 540 may determine a lower area from the folding axis as the target area among the first area 521 and the second area 523 (e.g., operation 1440).

According to an example embodiment, when determining that the attribute information is associated with a viewer function, the processor 540 may determine an upper area from the folding axis as the target area among the first area 521 and the second area 523 (e.g., operation 1430).

According to an example embodiment, when detecting an occurrence of a predetermined event in the electronic device 500 (e.g., operation 1510), the processor 540 may parse a target application having attribute information associated with the event (e.g., operation 1520), and may provide an execution screen of the target application to the target area.

According to an example embodiment, the processor 540 may control the execution screen of the application according to a change in the folding angle detected by the sensor module 530.

## Claims

1. An electronic device comprising:
a hinge (510) configured to allow the electronic device to be folded or unfolded;
a foldable display (520) disposed on at least one side of the electronic device such that the electronic device is folded or unfolded around the hinge (510);
a processor (540) configured to control an output screen of the foldable display (520);
a sensor module (530) configured to detect a folding angle of the electronic device; and
an input module (550) for a touch input applied to the foldable display (520),
wherein the foldable display (520, 601) comprises a first area (521, 931) disposed on one side of the hinge (510) and a second area (523, 933) disposed on the other side of the hinge, and
wherein the processor (540) is further configured to:
when an execution input for an application is received in a state in which the folding angle is in a predetermined range and the electronic device is in a table mode in which a folding axis of the hinge is substantially parallel to ground, determine, as a target area, one of the first area (931) and the second area (933) based on attribute information of the application,
provide an execution screen of the application to the determined target area.

2. The electronic device of claim 1, wherein the processor (540) is further configured to:
when an execution input for a second application different from the application is received while providing the execution screen of the application in the state in which the folding angle is in the predetermined range, provide an execution screen of the second application to an area other than the target area among the first area (931) and the second area (933).

3. The electronic device of claim 1, wherein the processor (540) is further configured to:
provide the execution screen of the application to an entirety of the foldable display including the first area and the second area;
provide a notification that the execution screen of the application can be provided to one of the first area and the second area by overlaying the notification on the execution screen of the application; and
if there is a user input for the notification within a predetermined period of time, provide the execution screen of the application to the target area.

4. The electronic device of claim 1, wherein the processor (540) is further configured to:
in response to receiving an execution input for the application, refer to the attribute information of the application,
when it is determined that the attribute information is associated with an input function, determine a lower area (933) from the folding axis as the target area among the first area (931) and the second area (933), and
when it is determined that the attribute information is associated with a viewer function, determine an upper area (931) from the folding axis as the target area among the first area (931) and the second area (933).

5. The electronic device of claim 4, wherein the processor (540) is further configured to:
when an occurrence of a predetermined event is detected in the electronic device, parse a target application having attribute information associated with the event, and
provide an execution screen of the target application to the target area.

6. The electronic device of claim 4, wherein the processor (540) is further configured to:
control the execution screen of the application according to a change in the folding angle detected by the sensor module.

7. A control method of controlling an electronic device comprising a hinge (510) configured to allow the electronic device to be folded or unfolded, a foldable display (520) disposed on at least one side of the electronic device such that the electronic device is folded or unfolded around the hinge (510), a processor (540) configured to control an output screen of the foldable display, a sensor module (530) configured to detect a folding angle of the electronic device, and an input module (550) for a touch input applied to the foldable display, the foldable display comprising a first area (521, 931) disposed on one side of the hinge and a second area (523, 933) disposed on the other side of the hinge, the control method comprising:
when an execution input for an application is received in a state in which the folding angle is in a predetermined range and the electronic device is in a table mode in which a folding axis of the hinge is substantially parallel to ground, determining, as a target area, one of the first area (931) and the second area (933) based on attribute information of the application,
providing an execution screen of the application to the determined target area.

8. The control method of claim 7, further comprising:
when an execution input for a second application different from the application is received while the execution screen of the application is being provided in the state in which the folding angle is in the predetermined range, providing an execution screen of the second application to an area other than the target area among the first area and the second area.

9. The control method of claim 7, further comprising:
providing the execution screen of the application to an entirety of the foldable display including the first area and the second area;
providing a notification that the execution screen of the application can be provided to one of the first area and the second area by overlaying the notification on the execution screen of the application; and
if there is a user input for the notification within a predetermined period of time, providing the execution screen of the application to the target area.

10. The control method of claim 7, wherein the method further comprises:
in response to receiving an execution input for the application, referring to the attribute information of the application;
when it is determined that the attribute information is associated with an input function, determining a lower area from the folding axis as the target area from among the first area and the second area; and
when it is determined that the attribute information is associated with a viewer function, determining an upper area from the folding axis as the target area among the first area and the second area.

11. The control method of claim 10, further comprising:
when an occurrence of a predetermined event is detected in the electronic device, parsing a target application having attribute information associated with the event; and
providing an execution screen of the target application to the target area.

12. The control method of claim 10, further comprising:
controlling the execution screen of the application according to a change in the folding angle detected by the sensor module.

13. A non-transitory computer-readable storage medium storing a program for controlling an operation of an electronic device comprising a hinge (510) configured to allow the electronic device to be folded or unfolded, a foldable display disposed on at least one side of the electronic device such that the electronic device is folded or unfolded around the hinge, a processor (540) configured to control an output screen of the foldable display, a sensor module (530) configured to detect a folding angle of the electronic device, and an input module (550) for a touch input applied to the foldable display, the foldable display comprising a first area (521, 931) disposed on one side of the hinge and a second area (523, 933) disposed on the other side of the hinge, the program, when executed by the processor, is configured to cause the electronic device to:
when an execution input for an application is received in a state in which the folding angle is in a predetermined range and the electronic device is in a table mode in which a folding axis of the hinge is substantially parallel to ground, determine, as a target area, one of the first area (931) and the second area (933) based on attribute information of the application,
provide an execution screen of the application to the target area.

## Patentansprüche

1. Elektronische Vorrichtung, umfassend:
ein Scharnier (510), das dazu konfiguriert ist, das Falten oder Entfalten der elektronischen Vorrichtung zu ermöglichen;
eine faltbare Anzeige (520), die an mindestens einer Seite der elektronischen Vorrichtung so angeordnet ist, dass die elektronische Vorrichtung um das Scharnier (510) gefaltet oder entfaltet wird;
einen Prozessor (540), der zum Steuern eines Ausgabebildschirms der faltbaren Anzeige (520) konfiguriert ist;
ein Sensormodul (530), das zum Erfassen eines Faltwinkels der elektronischen Vorrichtung konfiguriert ist; und
ein Eingabemodul (550) für eine Berührungseingabe, die auf die faltbare Anzeige (520) angewendet wird,
wobei die faltbare Anzeige (520, 601) einen ersten Bereich (521, 931), der auf einer Seite des Scharniers (510) angeordnet ist, und einen zweiten Bereich (523, 933), der auf der anderen Seite des Scharniers angeordnet ist, umfasst, und
wobei der Prozessor (540) ferner dazu konfiguriert ist,
wenn eine Ausführungseingabe für eine Anwendung in einem Zustand empfangen wird, in dem der Faltwinkel in einem vorbestimmten Bereich liegt und sich die elektronische Vorrichtung in einem Tischmodus befindet, in dem eine Faltachse des Scharniers im Wesentlichen parallel zum Boden verläuft, auf der Grundlage von Attributinformationen der Anwendung einen von dem ersten Bereich (931) und dem zweiten Bereich (933) als Zielbereich zu bestimmen,
einen Ausführungsbildschirm der Anwendung für den bestimmten Zielbereich bereitzustellen.

2. Elektronische Vorrichtung nach Anspruch 1, wobei der Prozessor (540) ferner dazu konfiguriert ist,
wenn eine Ausführungseingabe für eine zweite Anwendung, die sich von der Anwendung unterscheidet, empfangen wird, während der Ausführungsbildschirm der Anwendung in dem Zustand bereitgestellt wird, in dem der Faltwinkel in dem vorbestimmten Bereich liegt, einen Ausführungsbildschirm der zweiten Anwendung für einen anderen Bereich als den Zielbereich unter dem ersten Bereich (931) und dem zweiten Bereich (933) bereitzustellen.

3. Elektronische Vorrichtung nach Anspruch 1, wobei der Prozessor (540) ferner dazu konfiguriert ist,
den Ausführungsbildschirm der Anwendung für die Gesamtheit der faltbaren Anzeige einschließlich des ersten Bereichs und des zweiten Bereichs bereitzustellen;
eine Benachrichtigung, dass der Ausführungsbildschirm der Anwendung für einen von dem ersten Bereich und dem zweiten Bereich bereitgestellt werden kann, bereitzustellen, indem die Benachrichtigung auf dem Ausführungsbildschirm der Anwendung überlagert wird; und
falls innerhalb eines vorbestimmten Zeitraums eine Benutzereingabe für die Benachrichtigung erfolgt, den Ausführungsbildschirm der Anwendung für den Zielbereich bereitzustellen.

4. Elektronische Vorrichtung nach Anspruch 1, wobei der Prozessor (540) ferner dazu konfiguriert ist,
als Reaktion auf den Empfang einer Ausführungseingabe für die Anwendung auf die Attributinformationen der Anwendung zu verweisen,
wenn festgestellt wird, dass die Attributinformationen mit einer Eingabefunktion assoziiert sind, einen unteren Bereich (933) von der Faltachse aus als Zielbereich unter dem ersten Bereich (931) und dem zweiten Bereich (933) zu bestimmen, und
wenn festgestellt wird, dass die Attributinformationen mit einer Viewer-Funktion assoziiert sind, einen oberen Bereich (931) von der Faltachse aus als Zielbereich unter dem ersten Bereich (931) und dem zweiten Bereich (933) zu bestimmen.

5. Elektronische Vorrichtung nach Anspruch 4, wobei der Prozessor (540) ferner dazu konfiguriert ist,
wenn das Auftreten eines vorbestimmten Ereignisses in der elektronischen Vorrichtung erfasst wird, eine Zielanwendung zu parsen, die mit dem Ereignis assoziierte Attributinformationen aufweist, und
einen Ausführungsbildschirm der Zielanwendung für den Zielbereich bereitzustellen.

6. Elektronische Vorrichtung nach Anspruch 4, wobei der Prozessor (540) ferner dazu konfiguriert ist,
den Ausführungsbildschirm der Anwendung entsprechend einer vom Sensormodul erfassten Änderung des Faltwinkels zu steuern.

7. Steuerverfahren zum Steuern einer elektronischen Vorrichtung, die ein Scharnier (510), das dazu konfiguriert ist, das Falten oder Entfalten der elektronischen Vorrichtung zu ermöglichen, eine faltbare Anzeige (520), die an mindestens einer Seite der elektronischen Vorrichtung so angeordnet ist, dass die elektronische Vorrichtung um das Scharnier (510) gefaltet oder entfaltet wird, einen Prozessor (540), der zum Steuern eines Ausgabebildschirms der faltbaren Anzeige konfiguriert ist, ein Sensormodul (530), das zum Erfassen eines Faltwinkels der elektronischen Vorrichtung konfiguriert ist, und ein Eingabemodul (550) für eine auf die faltbare Anzeige angewendete Berührungseingabe umfasst, wobei die faltbare Anzeige einen ersten Bereich (521, 931), der auf einer Seite des Scharniers angeordnet ist, und einen zweiten Bereich (523, 933), der auf der anderen Seite des Scharniers angeordnet ist, umfasst, wobei das Steuerverfahren Folgendes umfasst:
wenn eine Ausführungseingabe für eine Anwendung in einem Zustand empfangen wird, in dem der Faltwinkel in einem vorbestimmten Bereich liegt und sich die elektronische Vorrichtung in einem Tischmodus befindet, in dem eine Faltachse des Scharniers im Wesentlichen parallel zum Boden verläuft, Bestimmen eines von dem ersten Bereich (931) und dem zweiten Bereich (933) als Zielbereich auf der Grundlage von Attributinformationen der Anwendung,
Bereitstellen eines Ausführungsbildschirms der Anwendung für den bestimmten Zielbereich.

8. Steuerverfahren nach Anspruch 7, umfassend ferner:
wenn eine Ausführungseingabe für eine zweite Anwendung, die sich von der Anwendung unterscheidet, empfangen wird, während der Ausführungsbildschirm der Anwendung in dem Zustand bereitgestellt wird, in dem der Faltwinkel in dem vorbestimmten Bereich liegt, Bereitstellen eines Ausführungsbildschirms der zweiten Anwendung für einen anderen Bereich als den Zielbereich unter dem ersten Bereich und dem zweiten Bereich.

9. Steuerverfahren nach Anspruch 7, umfassend ferner:
Bereitstellen des Ausführungsbildschirms der Anwendung für die Gesamtheit der faltbaren Anzeige einschließlich des ersten Bereichs und des zweiten Bereichs;
Bereitstellen einer Benachrichtigung, dass der Ausführungsbildschirm der Anwendung für einen von dem ersten Bereich und dem zweiten Bereich bereitgestellt werden kann, indem die Benachrichtigung auf dem Ausführungsbildschirm der Anwendung überlagert wird; und
falls innerhalb eines vorbestimmten Zeitraums eine Benutzereingabe für die Benachrichtigung erfolgt, Bereitstellen des Ausführungsbildschirms der Anwendung für den Zielbereich.

10. Steuerverfahren nach Anspruch 7, wobei das Verfahren ferner Folgendes umfasst:
Verweisen auf die Attributinformationen der Anwendung als Reaktion auf den Empfang einer Ausführungseingabe für die Anwendung;
wenn festgestellt wird, dass die Attributinformationen mit einer Eingabefunktion assoziiert sind, Bestimmen eines unteren Bereichs von der Faltachse aus als Zielbereich aus dem ersten Bereich und dem zweiten Bereich; und
wenn festgestellt wird, dass die Attributinformationen mit einer Viewer-Funktion assoziiert sind, Bestimmen eines oberen Bereichs von der Faltachse aus als Zielbereich unter dem ersten Bereich und dem zweiten Bereich.

11. Steuerverfahren nach Anspruch 10, umfassend ferner:
wenn das Auftreten eines vorbestimmten Ereignisses in der elektronischen Vorrichtung erfasst wird, Parsen einer Zielanwendung, die mit dem Ereignis assoziierte Attributinformationen aufweist; und
Bereitstellen eines Ausführungsbildschirms der Zielanwendung für den Zielbereich.

12. Steuerverfahren nach Anspruch 10, umfassend ferner:
Steuern des Ausführungsbildschirms der Anwendung entsprechend einer vom Sensormodul erfassten Änderung des Faltwinkels.

13. Nicht vorübergehendes, computerlesbares Speichermedium, auf dem ein Programm zur Steuerung des Betriebs einer elektronischen Vorrichtung gespeichert ist, die ein Scharnier (510), das dazu konfiguriert ist, das Falten oder Entfalten der elektronischen Vorrichtung zu ermöglichen, eine faltbare Anzeige, die an mindestens einer Seite der elektronischen Vorrichtung so angeordnet ist, dass die elektronische Vorrichtung um das Scharnier gefaltet oder aufgefaltet wird, einen Prozessor (540), der zum Steuern eines Ausgabebildschirms der faltbaren Anzeige konfiguriert ist, ein Sensormodul (530), das zum Erfassen eines Faltwinkels der elektronischen Vorrichtung konfiguriert ist, und ein Eingabemodul (550) für eine auf die faltbare Anzeige angewendete Berührungseingabe umfasst, wobei die faltbare Anzeige einen ersten Bereich (521, 931), der auf einer Seite des Scharniers angeordnet ist, und einen zweiten Bereich (523, 933), der auf der anderen Seite des Scharniers angeordnet ist, umfasst, wobei das Programm so konfiguriert ist, dass es beim Ausführen durch den Prozessor die elektronische Vorrichtung dazu veranlasst:
wenn eine Ausführungseingabe für eine Anwendung in einem Zustand empfangen wird, in dem der Faltwinkel in einem vorbestimmten Bereich liegt und sich die elektronische Vorrichtung in einem Tischmodus befindet, in dem eine Faltachse des Scharniers im Wesentlichen parallel zum Boden verläuft, auf der Grundlage von Attributinformationen der Anwendung einen von dem ersten Bereich (931) und dem zweiten Bereich (933) als Zielbereich zu bestimmen,
einen Ausführungsbildschirm der Anwendung für den Zielbereich bereitzustellen.

## Revendications

1. Dispositif électronique comprenant :
une charnière (510) configurée pour permettre au dispositif électronique d'être plié ou déplié ;
un affichage pliable (520) disposé sur au moins un côté du dispositif électronique de sorte que le dispositif électronique soit plié ou déplié autour de la charnière (510) ;
un processeur (540) configuré pour commander un écran d'affichage de l'affichage pliable (520) ;
un module de capteurs (530) configuré pour détecter un angle de pliage du dispositif électronique ; et
un module d'entrée (550) pour une entrée tactile appliquée à l'affichage pliable (520),
dans lequel l'affichage pliable (520, 601) comprend une première zone (521, 931) disposée sur un côté de la charnière (510) et une seconde zone (523, 933) disposée sur l'autre côté de la charnière, et
dans lequel le processeur (540) est en outre configuré pour :
lorsqu'une entrée d'exécution pour une application est reçue dans un état dans lequel l'angle de pliage est dans une plage prédéterminée et le dispositif électronique est dans un mode table dans lequel un axe de pliage de la charnière est sensiblement parallèle au sol, déterminer, en tant que zone cible, l'une de la première zone (931) et de la seconde zone (933) sur la base d'informations d'attribut de l'application,
fournir un écran d'exécution de l'application à la zone cible déterminée.

2. Dispositif électronique selon la revendication 1, dans lequel le processeur (540) est configuré en outre pour :
lorsqu'une entrée d'exécution pour une seconde application différente de l'application est reçue pendant la fourniture de l'écran d'exécution de l'application dans l'état dans lequel l'angle de pliage est dans la plage prédéterminée, fournir un écran d'exécution de la seconde application à une zone autre que la zone cible parmi la première zone (931) et la seconde zone (933).

3. Dispositif électronique selon la revendication 1, dans lequel le processeur (540) est configuré en outre pour :
fournir l'écran d'exécution de l'application à une totalité de l'affichage pliable comprenant la première zone et la seconde zone ;
fournir une notification indiquant que l'écran d'exécution de l'application peut être fourni à l'une de la première zone et de la seconde zone en superposant la notification sur l'écran d'exécution de l'application ; et
s'il existe une entrée utilisateur pour la notification dans une période de temps prédéterminée, fournir l'écran d'exécution de l'application à la zone cible.

4. Dispositif électronique selon la revendication 1, dans lequel le processeur (540) est configuré en outre pour :
en réponse à la réception d'une entrée d'exécution pour l'application, se référer aux informations d'attribut de l'application,
lorsqu'il est déterminé que les informations d'attribut sont associées à une fonction d'entrée, déterminer une zone inférieure (933) à partir de l'axe de pliage comme zone cible parmi la première zone (931) et la seconde zone (933), et
lorsqu'il est déterminé que les informations d'attribut sont associées à une fonction de visualisation, déterminer une zone supérieure (931) à partir de l'axe de pliage comme zone cible parmi la première zone (931) et la seconde zone (933).

5. Dispositif électronique selon la revendication 4, dans lequel le processeur (540) est configuré en outre pour :
lorsqu'une occurrence d'un événement prédéterminé est détectée dans le dispositif électronique, analyser une application cible ayant des informations d'attribut associées à l'événement, et
fournir un écran d'exécution de l'application cible à la zone cible.

6. Dispositif électronique selon la revendication 4, dans lequel le processeur (540) est configuré en outre pour :
commander l'écran d'exécution de l'application selon un changement de l'angle de pliage détecté par le module de capteurs.

7. Procédé de commande d'un dispositif électronique comprenant une charnière (510) configurée pour permettre au dispositif électronique d'être plié ou déplié, un affichage pliable (520) disposé sur au moins un côté du dispositif électronique de sorte que le dispositif électronique soit plié ou déplié autour de la charnière (510), un processeur (540) configuré pour commander un écran d'affichage de l'affichage pliable, un module de capteurs (530) configuré pour détecter un angle de pliage du dispositif électronique, et un module d'entrée (550) pour une entrée tactile appliquée à l'affichage pliable, l'affichage pliable comprenant une première zone (521, 931) disposée sur un côté de la charnière et une seconde zone (523, 933) disposée sur l'autre côté de la charnière, le procédé de commande consistant à :
lorsqu'une entrée d'exécution pour une application est reçue dans un état dans lequel l'angle de pliage est dans une plage prédéterminée et le dispositif électronique est dans un mode table dans lequel un axe de pliage de la charnière est sensiblement parallèle au sol, déterminer, en tant que zone cible, l'une de la première zone (931) et de la seconde zone (933) sur la base d'informations d'attribut de l'application,
fournir un écran d'exécution de l'application à la zone cible déterminée.

8. Procédé de commande selon la revendication 7, consistant en outre à :
lorsqu'une entrée d'exécution pour une seconde application différente de l'application est reçue pendant que l'écran d'exécution de l'application est fourni dans l'état dans lequel l'angle de pliage est dans la plage prédéterminée, fournir un écran d'exécution de la seconde application à une zone autre que la zone cible parmi la première zone et la seconde zone.

9. Procédé de commande selon la revendication 7, consistant en outre à :
fournir l'écran d'exécution de l'application à une totalité de l'affichage pliable comprenant la première zone et la seconde zone ;
fournir une notification indiquant que l'écran d'exécution de l'application peut être fourni à l'une de la première zone et de la seconde zone en superposant la notification sur l'écran d'exécution de l'application ; et
s'il existe une entrée utilisateur pour la notification dans une période de temps prédéterminée, fournir l'écran d'exécution de l'application à la zone cible.

10. Procédé de commande selon la revendication 7, dans lequel le procédé comprend en outre :
en réponse à la réception d'une entrée d'exécution pour l'application, se référer aux informations d'attribut de l'application ;
lorsqu'il est déterminé que les informations d'attribut sont associées à une fonction d'entrée, déterminer une zone inférieure à partir de l'axe de pliage comme zone cible parmi la première zone et la seconde zone ; et
lorsqu'il est déterminé que les informations d'attribut sont associées à une fonction de visualisation, déterminer une zone supérieure à partir de l'axe de pliage comme zone cible parmi la première zone et la seconde zone.

11. Procédé de commande selon la revendication 10, consistant en outre à :
lorsqu'une occurrence d'un événement prédéterminé est détectée dans le dispositif électronique, analyser une application cible ayant des informations d'attribut associées à l'événement ; et
fournir un écran d'exécution de l'application cible à la zone cible.

12. Procédé de commande selon la revendication 10, consistant en outre à :
commander l'écran d'exécution de l'application selon un changement de l'angle de pliage détecté par le module de capteurs.

13. Support de stockage lisible par ordinateur non transitoire stockant un programme pour commander un fonctionnement d'un dispositif électronique comprenant une charnière (510) configurée pour permettre au dispositif électronique d'être plié ou déplié, un affichage pliable disposé sur au moins un côté du dispositif électronique de sorte que le dispositif électronique soit plié ou déplié autour de la charnière, un processeur (540) configuré pour commander un écran d'affichage de l'affichage pliable, un module de capteurs (530) configuré pour détecter un angle de pliage du dispositif électronique, et un module d'entrée (550) pour une entrée tactile appliquée à l'affichage pliable, l'affichage pliable comprenant une première zone (521, 931) disposée sur un côté de la charnière et une seconde zone (523, 933) disposée sur l'autre côté de la charnière, le programme, lorsqu'il est exécuté par le processeur, étant configuré pour amener le dispositif électronique à :
lorsqu'une entrée d'exécution pour une application est reçue dans un état dans lequel l'angle de pliage est dans une plage prédéterminée et le dispositif électronique est dans un mode table dans lequel un axe de pliage de la charnière est sensiblement parallèle au sol, déterminer, en tant que zone cible, l'une de la première zone (931) et de la seconde zone (933) sur la base d'informations d'attribut de l'application,
fournir un écran d'exécution de l'application à la zone cible.
